(19)

**Europäisches Patentamt**
**European Patent Office**
**Office européen des brevets**

(11) **EP 4 685 647 A1**

(12) **EUROPEAN PATENT APPLICATION**

(43) Date of publication:
**28.01.2026 Bulletin 2026/05**

(21) Application number: **25181611.2**

(22) Date of filing: **09.06.2025**

(51) International Patent Classification (IPC):
**G06F 11/07** (2006.01)          **G06F 11/30** (2006.01)
**G06F 11/34** (2006.01)

(52) Cooperative Patent Classification (CPC):
**G06F 11/079; G06F 11/0709; G06F 11/0778;**
**G06F 11/3006;** G06F 11/3466

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **22.07.2024 US 202463673917 P**
            **22.07.2024 US 202463673934 P**
            **16.12.2024 US 202418982882**

(71) Applicant: **Microsoft Technology Licensing, LLC**
**Redmond, WA 98052 (US)**

(72) Inventors:
• **LAVI, YANIV**
**Redmond, 98052 (US)**

• **ALBURQUERQUE, MICHAEL TONY**
**Redmond, 98052 (US)**
• **TITON, MYRIAM**
**Redmond, 98052 (US)**
• **NAIM-NAUERMAN, EFRAT**
**Redmond, 98052 (US)**
• **SAMAMA, JEREMY**
**Redmond, 98052 (US)**
• **LEMBERG, RACHEL**
**Redmond, 98052 (US)**
• **LEIBOVITCH, INBAL**
**Redmond, 98052 (US)**

(74) Representative: **CMS Cameron McKenna Nabarro**
**Olswang LLP**
**Cannon Place**
**78 Cannon Street**
**London EC4N 6AF (GB)**

(54) **AUTOMATED INCIDENT INVESTIGATION**

(57)     Systems and methods are provided for automated incident investigation. Anomaly detection is used to identify anomalies in incident data (e.g., alerts, changes, metrics, logs, and/or system health), and the identified anomalies are converted into facts (or textual prompt inputs for a large language model ("LLM")). A troubleshooting or diagnostic system is run on the anomalies to provide additional facts to identify a root cause of an incident. The facts from the diagnostics, the facts from the anomaly detections are entered into a consolidated explainer that generates a summary of what happened, what is a likely cause, and what to do next to resolve the issue. In examples, anomaly enrichment data including a time correlation result, a weighted list of abnormal transaction patterns, a list of abnormal trace patterns, a list of exception patterns, a difference pattern, and/or region data are input as further facts to enhance the incident investigation process.

Fig. 1

EP 4 685 647 A1

## Description

### CROSS-REFERENCES TO RELATED APPLICATIONS

This application claims priority to U.S. Patent Application Ser. No. 63/673,917 (the " '917 Application"), filed July 22, 2024, by Jeremy Samama et al. (attorney docket no. 502409-US01-PSP), entitled, "Automated Incident Investigation," and U.S. Patent Application Ser. No. 63/673,934 (the " '934 Application"), filed July 22, 2024, by Yaniv Lavi et al. (attorney docket no. 502410-US01-PSP), entitled, "Automated Incident Investigation," the disclosure of each of which is incorporated herein by reference in its entirety for all purposes. This application also claims priority to U.S. Patent Application No. 18/982,882 filed 16 December 2024, entitled "Automated Incident Investigation", the disclosure of which is incorporated herein by reference in its entirety for all purposes.

### BACKGROUND

Computing systems (such as cloud computing systems) provide a number of services and applications to users. Occasionally, however, unplanned or unforeseen interruptions (referred to herein as "incidents" or "service incidents") occur that impacts systems, services, applications, users, and/or devices. It is with respect to this general technical environment to which aspects of the present disclosure are directed. In addition, although relatively specific problems have been discussed, it should be understood that the examples should not be limited to solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for automated incident investigation. Anomaly detection is used to identify anomalies in incident data (e.g., alert data, change data, metrics data, log data, and/or system health data), and the identified anomalies are converted into facts (or textual prompt inputs for a large language model ("LLM")). A troubleshooting or diagnostic system is run on the anomalies to provide additional facts to identify a root cause of an incident. The facts from the diagnostics and the facts from the anomaly detections are entered into a consolidated explainer that generates a summary of what happened, what is a likely cause, and what to do next to resolve the issue. In examples, anomaly enrichment data including a time correlation result, a weighted list of abnormal transaction patterns, a list of abnormal trace patterns, a list of exception patterns, a difference pattern, and/or region data are input as further facts to enhance the incident investigation process.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.

Fig. 1 depicts an example system for implementing automated incident investigation.

Figs. 2A-2C depict example implementations for anomaly enrichment related to abnormal transaction patterns when implementing automated incident investigation.

Figs. 2D and 2E depict example implementations for anomaly enrichment related to abnormal trace patterns when implementing automated incident investigation.

Fig. 3 depicts an example user interface ("UI") illustrating an example investigation summary that is output from a large language model ("LLM") when for implementing automated incident investigation functionalities.

Figs. 4A and 4B depict an example method for implementing automated incident investigation.

Fig. 5 depicts another example method for implementing automated incident investigation.

Fig. 6 depicts a block diagram illustrating example physical components of a computing device with which aspects of the technology may be practiced.

## DETAILED DESCRIPTION OF CERTAIN EMBODIMENTS

As briefly discussed above, incidents occasionally occur that impacts systems, services, applications, users, and/or devices. Although some existing systems cover diagnostics of such incidents, such systems are domain-based and are neither aware of what is happening under the applications nor aware of the platform or the virtual machine ("VM") itself. If the issue is on that level, then such a system might provide the wrong responses regarding what to do. Also, current incident investigation tools are manually implemented processes that are implemented based on dashboards, queries, troubleshooters, and/or other similar tools.

The present technology provides for end-to-end automated incident investigation across multiple layers, including the application layer, the managed infrastructure layer, and the platform layer. Introducing tools and capabilities to incident investigation processes reduces the need for manual triage, with the system undertaking investigation swiftly while navigating engineers, technicians, administrators, etc. from incident detection to resolution.

Various modifications and additions can be made to the embodiments discussed herein without departing from the scope of the disclosed techniques. For example, while the embodiments described above refer to particular features, the scope of the disclosed techniques also includes embodiments having different combinations of features and embodiments that do not include all of the above-described features.

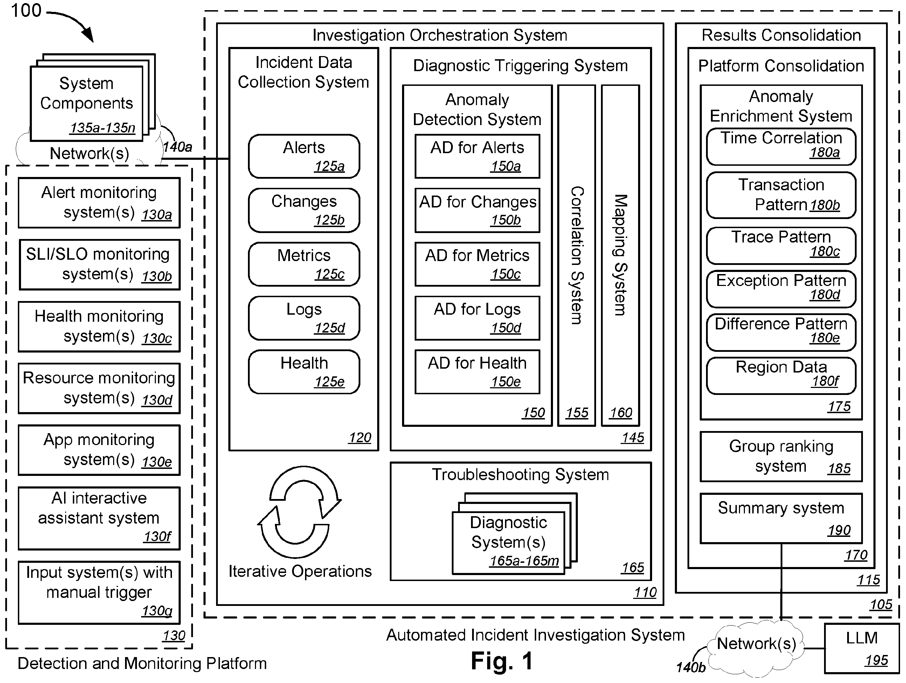

Turning to the embodiments as illustrated by the drawings, Figs. 1-6 illustrate some of the features of methods, systems, and apparatuses for implementing automated incident investigation, and, more particularly, to methods, systems, and apparatuses for implementing anomaly enrichments when implementing automated incident investigation, as referred to above. The methods, systems, and apparatuses illustrated by Figs. 1-6 refer to examples of different embodiments that include various components and steps, which can be considered alternatives or which can be used in conjunction with one another in the various embodiments. The description of the illustrated methods, systems, and apparatuses shown in Figs. 1-6 is provided for purposes of illustration and should not be considered to limit the scope of the different embodiments.

Fig. 1 depicts an example system 100 for implementing automated incident investigation. System 100 includes an automated incident investigation system 105 that is configured to provide an automated end-to-end incident flagging, anomaly detection and analysis, troubleshooting, enrichment, and summary platform across an application layer with applications and data, a platform layer that provides an environment on which the application layer runs, and a managed infrastructure layer that provides the compute and storage hardware as well as facilities and networking services that support the platform layer. The automated incident investigation system 105 includes an investigation orchestration system 110 and a results consolidation system 115. The investigation orchestration system 110 is configured to provide anomaly detection, anomaly analysis, and troubleshooting functionalities based on incident data collected by an incident data collection system 120. In examples, the incident data includes at least one of alert data 125a, change data 125b, metrics data 125c, log data 125d, or system health data 125e (collectively, "incident data 125") collected from a detection and monitoring platform 130.

In some examples, the detection and monitoring platform 130 includes at least one of an alert monitoring system(s) 130a, a service level indicator ("SLI") or service level objective ("SLO") monitoring system(s) 130b, a health monitoring system(s) 130c, a resource monitoring system(s) 130d, an applications monitoring system(s) 130e, an AI-based interactive assistant system(s) 130f, or an input system(s) 130g for manual triggering of incident investigation. At least one of the alert monitoring system(s) 130a, the SLI or SLO monitoring system(s) 130b, the health monitoring system(s) 130c, the resource monitoring system(s) 130d, and/or the applications monitoring system(s) 130e is used to monitoring operations and/or workload executions on system components 135a-135n in network(s) 140a for the incident data 125. In examples, workloads being executed on the system components 135a-135n each includes one of a compute workload, a virtual machine ("VM") workload, a container orchestration environment workload, a software application workload, an artificial intelligence ("AI") workload, a machine learning ("ML") workload, a system operation workload, a memory access and operation workload, a database access and operation workload, a data transfer workload, or a service bus workload.

The alert monitoring system(s) 130a monitors for alerts that have triggered in the system, either by the system components or because of the system components. The SLI or SLO monitoring system(s) 130b monitors the SLI corresponding to performance of the system components for compliance with the SLO corresponding to objectives that must be met to satisfy a service level agreement ("SLA") between parties. The health monitoring system(s) 130c monitors for health signals from the system components. The resource monitoring system(s) 130d monitors metrics and usage data for resources in the system components. The applications monitoring system(s) 130e monitors software applications, such as log data (including transaction data and/or trace message data). The AI-based interactive assistant system(s) 130f monitors its interactions with a user to determine whether the user expressly or impliedly triggers incident investigation, while the input system(s) 130g provides users with manual triggers for initiating incident investigations.

In examples, the alert data 125a corresponds to data that is collected by the detection and monitoring platform 130 when a parameter value being monitored exceeds one of a set threshold value, a set threshold percentage, a set multiple of standard deviations for the parameter value, or a deviation from an observed pattern. In some cases, the parameter value corresponds to one of an amount of compute resources used, a percentage of compute resource used, an amount of memory resources used, a percentage of memory resource used, an amount of storage resources used, a percentage of storage resource used, a number of failures, a percentage of failures, a number of successful operations, or a percentage of successful operations.

In some examples, the change data 125b corresponds to data that is collected by the detection and monitoring platform 130 when an incident occurs within a threshold period following one of a configuration change, a certificate change, a permissions change, a pathname change, an identifier ("ID") change, a location change, a patch installation, a hardware update, a firmware update, or a software update for a corresponding one of a compute resource, a memory resource, a storage resource, a network resource, a VM, an orchestrator, a hypervisor, a platform firmware, a device, a software application, a platform, or an infrastructure component.

In some instances, the metrics data 125c corresponds to data that is collected by the detection and monitoring platform 130 when time-series metrics values being monitored exceed one of a set threshold value, a set threshold percentage, a set multiple of standard deviations for the time-series metrics values, a sudden spike in observed metrics values, a sudden drop in observed metrics values, or a deviation from an observed pattern in the time-series metrics values. In some cases, the time-series metrics values correspond to metrics related to one of an amount of compute resources used, a percentage of compute resource used, an amount of memory resources used, a percentage of memory resource used, an amount of storage resources used, a percentage of storage resource used, a number of failures, a percentage of failures, a number of successful operations, or a percentage of successful operations.

In some cases, the log data 125d corresponds to data that is collected by the detection and monitoring platform 130 when a new pattern in a log for one of a compute resource, a memory resource, a storage resource, a network resource, a VM, an orchestrator, a hypervisor, a platform firmware, a device, a software application, a platform, or an infrastructure component is observed, and a sentiment analysis on the new pattern indicates a potential issue with the new pattern.

In examples, the system health data 125e corresponds to data that is collected by the detection and monitoring platform 130 when a health signal value being monitored for one of a compute resource, a memory resource, a storage resource, a network resource, a VM, an orchestrator, a hypervisor, a platform firmware, a device, a software application, a platform, or an infrastructure component either falls below a threshold health level or deviates from a determined normal range of operating parameter values.

The investigation orchestration system 110 includes the incident data collection system 120, a diagnostics triggering system 145, and a troubleshooting system 165. The diagnostics triggering system 145 includes an anomaly detection system 150, a correlation system 155, and a mapping system 160. The anomaly detection system 150 identifies anomalies associated with the incident data. In some examples, the anomaly detection system 150 includes at least one of an alert anomaly detection subsystem 150a, a change anomaly detection subsystem 150b, a metrics anomaly detection subsystem 150c, a log anomaly detection subsystem 150d, or a system health anomaly detection subsystem 150e. The alert anomaly detection subsystem 150a identifies alert anomalies associated with the alert data 125a. The change anomaly detection subsystem 150b identifies change anomalies associated with the change data 125b. The metrics anomaly detection subsystem 150c identifies metrics anomalies associated with the metrics data 125c. The log anomaly detection subsystem 150d identifies log anomalies associated with the log data 125d. The system health anomaly detection subsystem 150e identifies system health anomalies associated with the system health data 125e. The correlation system 155 identifies which of the anomalies identified by the anomaly detection system 150 (or by individual subsystem(s) 150a-150e) are correlated with respect to a time at which an incident that is flagged for investigation occurred. The mapping system 160 maps each anomaly that has been correlated with respect to the time at which the incident occurred with at least one system component 135a-135n. The troubleshooting system 165 causes a plurality of diagnostics systems 165a-165m to identify a potential root cause(s) for the incident, in some cases, based on the which anomalies are correlated with respect to the time at which the incident occurred and/or based on the mapping of the anomalies. Herein, *m* and *n* are non-negative integer numbers that may be either all the same as each other, all different from each other, or some combination of same and different (e.g., one set of two or more having the same values with the others having different values, a plurality of sets of two or more having the same value with the others having different values).

In examples, iterative operations (as denoted by the pair of circular block arrows in the investigation orchestrator system 110) are performed to repeat the following operations for a set number of iterations, until no additional anomalies are identified as being correlated with respect to the time the incident occurred, or until potential root causes that are identified converge:

(I) identifying, using the anomaly detection system 150, additional anomalies based on the potential root causes initially identified by the plurality of diagnostics systems 165a-165m or based on potential root causes identified in a preceding iteration;

(II) identifying, using the correlation system 155, which of the additional anomalies are correlated with respect to the time at which the incident occurred;

(III) mapping, using the mapping system 160, the additional anomalies that have been correlated with respect to the time at which the incident occurred to system components 135a-135n; and

(IV) causing, using the troubleshooting system 165, the plurality of diagnostics systems to identify additional potential root causes for the incident, based at least on the one or more additional anomalies that are identified to correlate with the time at which the incident occurred.

The results consolidation system 115 is configured to generate a summary report of the collected data compiled or generated by the investigation orchestrator system 110, the summary report providing a comprehensive end-to-end view of the incident, possible explanations or potential root causes for the incident, and potential steps to resolve the incident. The results consolidation system 115 includes a platform consolidation system 170 that includes an anomaly enrichment system 175, a group ranking system 185, and a summary system 190. The anomaly enrichment system 175 compiles enrichment data associated with at least one of a period during which the incident occurred, a transaction pattern that is correlated with the period during which the incident occurred, a trace pattern that is correlated with the period during which the incident occurred, an exception that triggered in the period during which the incident occurred, a geographic region or cloud region covered by a data center from which incident occurred, or a difference pattern corresponding to a difference between a pattern occurring before the incident occurred and a pattern occurring after the incident occurred. In examples, the enrichment data further includes user defined enrichments like relevant queries, metrics, and troubleshooting guides ("TSGs"). The group ranking system 185 performs analysis on multiple potential root causes (if more than one) and assigns rankings to the multiple potential root causes. The summary system 190 generates prompts as input to an LLM or LLM-based system 195 (accessible via network(s) 140b), and the LLM or LLM-based system 195 outputs the summary report. Although a network-connected LLM is shown in Fig. 1, denoting an online LLM, an offline LLM may be used instead, as a backup, or as a supplemental tool. In examples, the LLM utilizes or enforces retrieval-augmented generation ("RAG") processes to optimize the output of the LLM such that it references an authoritative knowledge base outside its training data sources before generating a response. The platform consolidation system 170 presents the summary report to a user, either in response to a trigger initiated by the user or because the user is a designated recipient of such reports.

As used herein, an LLM refers to a machine learning model that is trained and fine-tuned on a large corpus of media (e.g., text, audio, video, or software code), and that can be accessed and used through an application programming interface ("API") or a platform. Examples of LLMs (or more generally language models ("LMs")) include Bidirectional Encoder Representations from Transformers ("BERT"), Word2Vec, Global and Vectors ("GloVe"), Embeddings from Language Models ("ELMo"), XLNet, Generative Pre-trained Transformer ("GPT")-3 or GPT-4, Large Language Model Meta AI ("LLaMA") 2, or BigScience Large Open-science Open-access Multilingual Language Model (BLOOM). Networks 140a and 140b (collectively, "network(s) 140") may each include at least one of a distributed computing network, such as the Internet, a private network, a commercial network, or a cloud network, and/or the like.

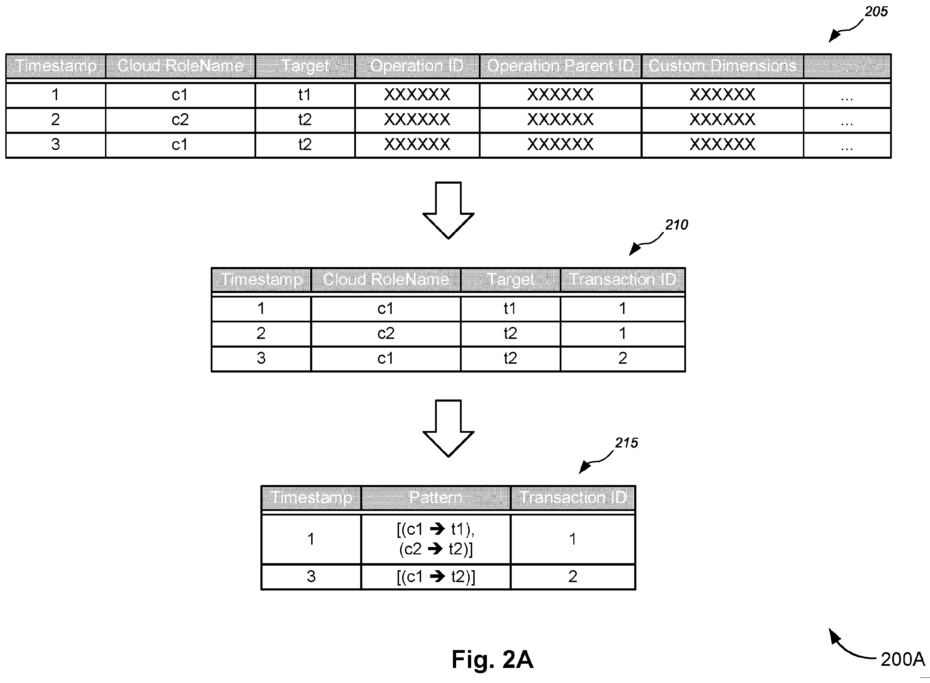

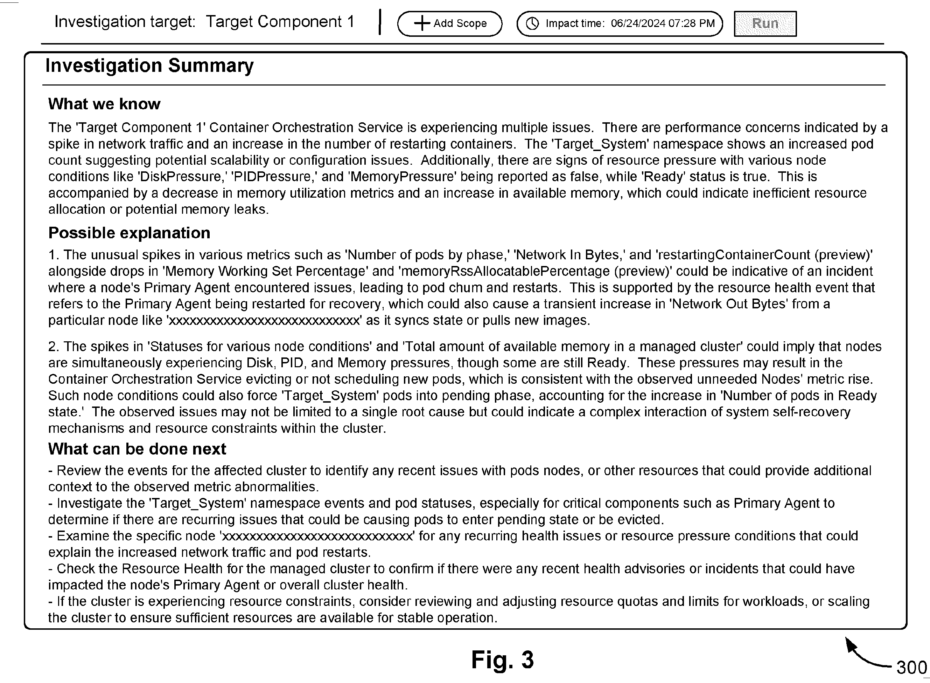

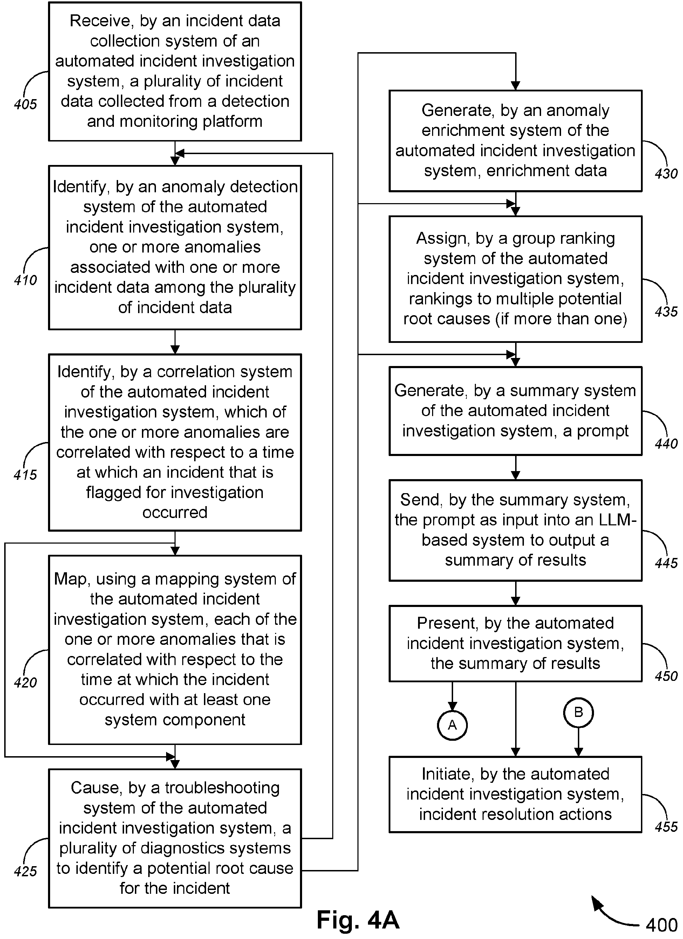

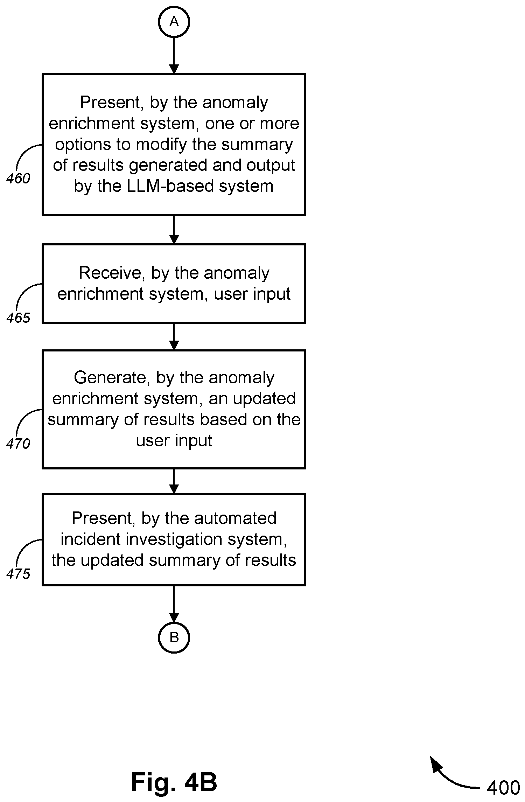

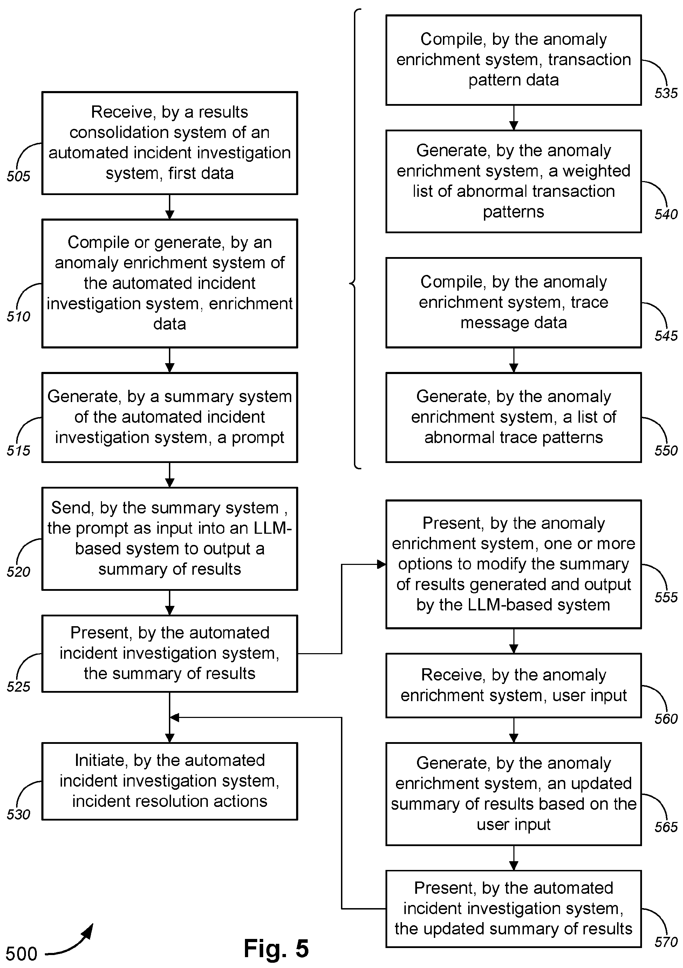

In operation, the automated incident investigation system 105 and/or its constituent systems or subsystems may perform methods for implementing automated incident investigation, as described in detail with respect to Figs. 2A-5. For example, example implementations 200A-200D as described below with respect to Figs. 2A-2E, example UI 300 as described below with respect to Fig. 3, and methods 400 and 500 as described below with respect to Figs. 4 and 5 may be applied with respect to the operations of system 100 of Fig. 1.

In an aspect, the automated incident investigation system is used to pull information on recent alerts and/or incidents in a cloud workload and their details, including user defined enrichments like relevant queries, metrics, and TSGs. The automated incident investigation system uses the information in the recent alerts or incidents to narrow the scope of the incident investigation and to run anomaly detection on one or more of the following: (a) user-provided data enrichments in the incidents or alerts; (b) related workload application data used to further narrow the scope of the incident investigation to particular compute and dependency resources; (c) a compute and dependency resources platform that is provided as well as custom logs and metrics; and/or (d) cloud-platform-provided data. The automated incident investigation system uses the anomalies to trigger additional resource-specific diagnostic tools to attempt to reach a root cause analysis. This differs from existing systems in that resource-specific diagnostic tools (e.g., for collecting and analyzing dumps, code optimization tools, and/or performance analysis tools) are typically manually implemented. The automated incident investigation system transforms the TSGs, anomalies, and results into facts (or textual LLM prompt input) that can be processed by the LLM. Using a RAG-enforced LLM as well as anomaly detection, the automated incident investigation system provides information regarding what happened (e.g., the incident and details surrounding the incident), a cause of the incident, and next actions based on the facts provided.

In another aspect, to address an incident, the automated incident investigation system pinpoints a failing segment within an application, and identifies a sequence of actions leading to the identified failing segment (referred to herein as "transaction pattern"). The automated incident investigation system identifies the transaction patterns contributing to the failure to allow for better explanation of unusual failures to site reliability engineering ("SRE") teams and/or application developers other than simply providing the bottom-line issue. The automated incident investigation system constructs a transaction ID from logs by combining information such as operation ID, operation parent ID, and custom dimensions stored through a telemetry framework, by filtering transactions for identified abnormal dependencies (e.g., one or more of timestamp, cloud role name, target, success, operation ID, operation parent ID, and/or custom dimensions), and by aggregating logs based on transaction to compute weights per transaction pattern. The automated incident investigation system generates a list of weighted transaction patterns by number of occurrences and/or by importance for the identified failed dependency. Analysis of the most important transaction pattern contributes to helping find information such as the type of request leading to failures as well as the cloud role (or system component) emitting those requests.

Outputs of the automated incident investigation system include: (1) One specific transaction pattern to a dependency or role started to fail; (2) All requests or dependency calls to a dependency or role started to fail (with no specific transaction pattern); (3) Most requests or dependency calls to a dependency or role started to fail (with failure percentage explained by many unspecified transaction patterns); and/or (4) A significant number of dependency or role failures is explained by several transactions patterns (e.g., several patterns returned that all end in the same requests or dependency).

Transaction patterns help identify important information for investigation such as the type of request, the node emitting the request, and the sequence of actions performed leading to an abnormal number of failures. The automated incident investigation system automatically performs incident investigation without the need of an engineer to search for heuristics online and to design custom queries.

In another aspect, the automated incident investigation system initially localizes an abnormal role or dependency using transactions analysis found in an application or across applications, then a list of enrichments is provided to produce hints for root cause investigation such as impacted region or abnormal traces. Examples of failed transactions from failure events are also provided for users to explore. Distributed tracing in logs is taken into account for finding anomalies across micro services, and other complicated workflows. The set of enrichments provided include: (A) time correlation; (B) transaction patterns; (C) trace patterns; (D) exception patterns; and/or (E) region data. Time correlation includes computing when an incident actually started, which can also be different from the time the incident is detected. Time correlation can also be used to eliminate a failure from the root cause - that is, if the incident started more than a certain amount of time before failure of a dependency or role, this could mean the failing dependency or role is likely not related to the incident we are investigating. Transaction patterns include computing a weighted list of abnormal transaction patterns leading to the incident. This can help explain the issue and help the user identify root cause, for example, where the same dependency fails in 2 different paths. Trace patterns include computing the most common abnormal trace pattern coming from anomaly detection, applied after log reduction of the trace messages. This trace pattern can provide free text explanation of the incident. Exception patterns are similar to the trace pattern, and includes computing the abnormal error messages occurring at the time of the incident. Region data includes computing which region(s) the resources associated with the incident are located, using an anomaly detection algorithm. This list of enrichments provides useful hints for the SRE and/or application developer to investigate an incident without any input from the user. For example, in addition to receiving an incident, the automated incident investigation system can infer immediately which region is impacted and what is the stack trace of the issue coming from exceptions, which provide very valuable inputs for investigation. This list of enrichments is not limited to those listed above. Because of the diversity of applications, there is no standard for investigating an issue in application data. The automated incident investigation system automatically provides a list of insights without user input to help to easily investigate an incident.

In yet another aspect, after an LLM-based system (e.g., the LLM or LLM-based system 195) generates and outputs a summary of results (e.g., a summary report), an anomaly enrichment system (e.g., the anomaly enrichment system 175) presents one or more options to modify the summary of results generated and output by the LLM-based system. In examples, the one or more options include at least one of first options to dismiss LLM-generated data, second options to edit the LLM-generated summary of results, or third options to manually add data to the LLM-generated summary of results. In some examples, the anomaly enrichment system receives user input including one of first instructions to dismiss second data among LLM-generated data in the LLM-generated summary of results, second instructions to edit the LLM-generated summary of results, or third instructions to manually add third data to the LLM-generated summary of results. In some cases, the second data includes at least one of anomalous data or irrelevant data. In this manner, by dismissing anomalous or irrelevant data, only pertinent information is considered, by the system, in subsequent analyses of the same or similar problems. By enabling editing of the LLM-generated summary, the system provides for more accurate and context-specific information to be reflected in subsequent analyses of the same or similar problems. In some instances, the third data includes at least one of one or more resources, one or more alerts, one or more logs, one or more metrics, one or more diagnostics results, one or more text notes, or one or more images. In this manner, manual input (in this case, the third data) would be taken into account as updated context in subsequent analyses of the same or similar problems, in some cases, providing recommendations based on the updated context. In examples, the anomaly enrichment system generates an updated summary of results based on the user input, and the updated summary of results are presented to the user. The features for dismissing LLM-generated data, editing LLM-generated summaries, and/or adding manual data to the LLM-generated data or summaries provide users with greater control and flexibility in managing AI-based investigations, ensuring that LLM-generated results are more relevant and guided by the users as well in interaction with the system.

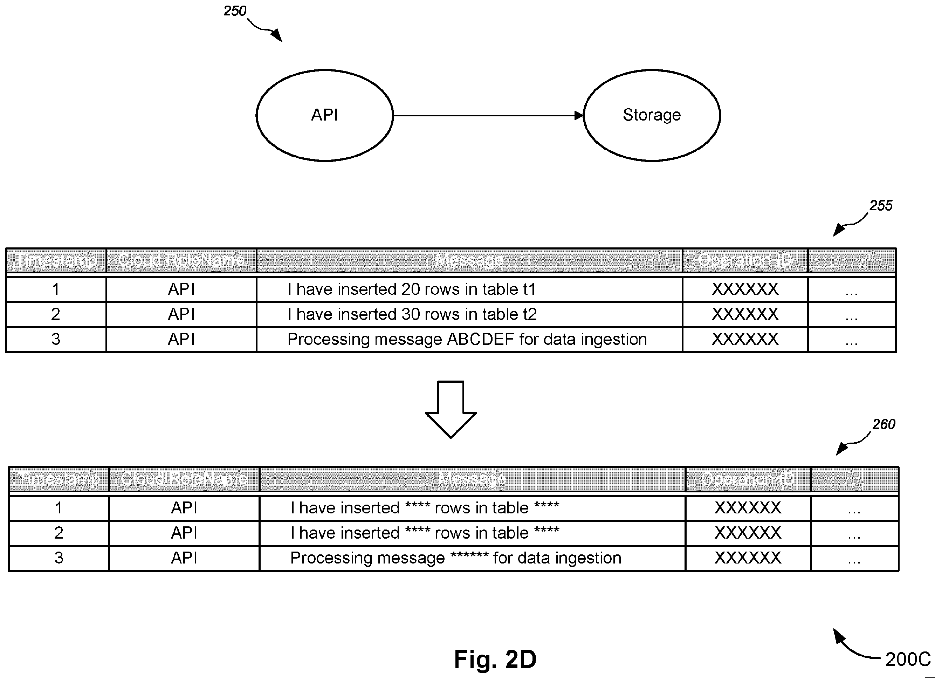

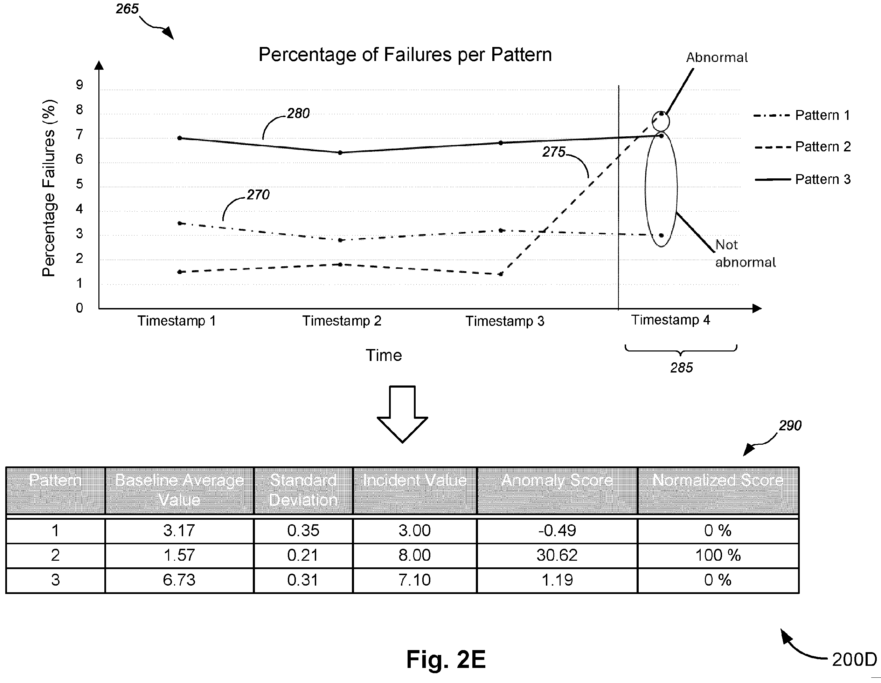

Figs. 2A-2C depict example implementations 200A and 200B for anomaly enrichment related to abnormal transaction patterns when implementing automated incident investigation. Figs. 2D and 2E depict example implementations 200C and 200D for anomaly enrichment related to abnormal trace patterns when implementing automated incident investigation.

With reference to example implementation 200A of Fig. 2A, log data 205 (depicted in Fig. 2A as a table of values) includes telemetry data associated with each transaction among a plurality of transactions between system components. The log data 205 includes transaction information such as timestamp data, cloud role name data for originating system components, and target data for recipient system components. In some cases, the telemetry data includes at least one of operation ID, operation parent ID, or custom dimension data for each transaction, and in some cases, success as well. In examples, an anomaly enrichment system (e.g., anomaly enrichment system 175 of Fig. 1) assigns transaction IDs to the plurality of transactions based on the telemetry data (as shown in dataset 210 in Fig. 2A), combines transactions that share transaction IDs (as shown in dataset 215 in Fig. 2A), and identifies transaction patterns from combined and uncombined transactions among the plurality of transactions (as shown in dataset 215 in Fig. 2A). The pattern, at timestamp 1, includes component c1 to target t1 and component c2 to target t2, collectively having transaction ID 1. The pattern, at timestamp 2, includes component c1 to target t2, and having transaction ID 2.

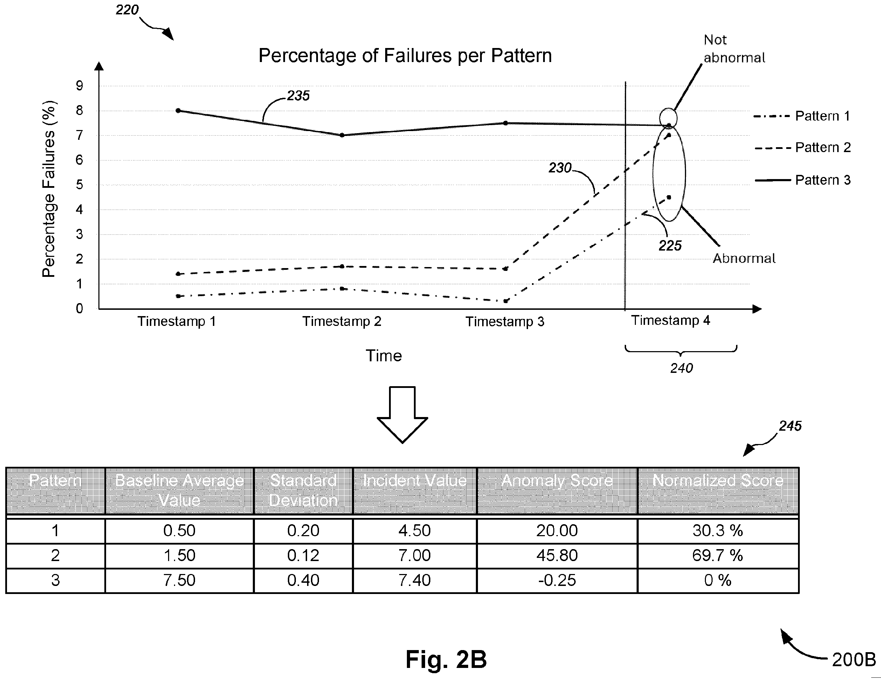

Referring to example implementation 200B of Fig. 2B, graph 220 shows percentage of failures at each of four Timestamps for each of three transaction patterns (in this case, Pattern 1 with corresponding curve 225, Pattern 2 with corresponding curve 230, and Pattern 3 with corresponding curve 235, depicted in Fig. 2B by a dot-dash line, a dashed line, and a solid line, respectively). Although graph 220 is directed to use of a parameter value corresponding to a percentage of failures, the parameter value can correspond to any one of a number of failures, a percentage of failures, a number of successful operations, or a percentage of successful operations. As shown in graph 220, Patterns 1 and 2 have relatively low percentages of failure at Timestamps 1-3, but spike in terms of percentage of failure at Timestamp 4. Thus, Timestamp 4 represents an incident-relevant time window 240. In contrast, Pattern 3 has a relatively high percentage of failures, but does not deviate much from its baseline average value. Accordingly, although Pattern 3 has percentage of failure in the incident-relevant time window 240 that is higher than that of either Pattern 1 or Pattern 2, and due to the spikes in failure percentage for Pattern 1 and Pattern 2, the values for Patterns 1 and 2 are abnormal while the value for Pattern 3 is not abnormal in the incident-relevant time window 240.

In considering normal versus abnormal transaction patterns, the anomaly enrichment system or a computing system in communication with the anomaly enrichment system can analyze the values for each transaction pattern. For instance, with reference to dataset 245 in Fig. 2B, Pattern 1 is determined to have a baseline average value of 0.50 % Failure, with a standard deviation of 0.20, and an incident value of 4.50 % Failure. Pattern 2 is determined to have a baseline average value of 1.50 % Failure, with a standard deviation of 0.12, and an incident value of 7.0 % Failure. Pattern 3 is determined to have a baseline average value of 7.50 % Failure, with a standard deviation of 0.40, and an incident value of 7.40 % Failure. The anomaly enrichment system or the computing system identifies anomalous or abnormal transaction patterns by calculating an anomaly score for each transaction pattern. The anomaly score corresponds to a number of standard deviations from the baseline average parameter value to the incident parameter value, and is calculated using the following equation:

$$Anomaly\ Score = \frac{[Incident\ Value - Baselin\quad Average\ Value]}{Standard\ Deviation}. \qquad \text{(Eqn. 1)}$$

As shown in the dataset 245, Patterns 1 through 3 have anomaly scores of 20.00, 45.80, and -0.25, respectively. In examples, the anomaly enrichment system identifies abnormal transaction patterns based on whether corresponding anomaly scores each exceeds a threshold value (e.g., 2, 3, 4, or 5, or greater). In this example implementation 200B, both Patterns 1 and 2 have anomaly scores that exceed the threshold value. For each abnormal transaction pattern, the anomaly enrichment system calculates a normalized anomaly score based on a ratio of the anomaly score for that abnormal transaction pattern and a sum of anomaly scores for all identified abnormal transaction patterns, according to the following equation:

$$Normalized\ Score_i = \frac{Anomaly\ Score_i}{\sum_{i=1}^{p} Anomaly\ Score_i}, \qquad \text{(Eqn. 2)}$$

where $i$ is an index value for abnormal transaction patterns, and $p$ is a total number of abnormal transaction patterns. In this example implementation 200B, Patterns 1 and 2 have normalized scores of 30.3 % and 69.7 %. Although particular equations (in this case, Eqns. 1 and 2) are used to obtain an Anomaly Score and a Normalized Score, other anomaly detection algorithms - such as 3-sigma, Z-Score, One-Class Support Vector Machines ("SVM"), Local Outlier Factor, Isolation Forests, Gaussian Mixture Models, and/or Autoencoders - may be used for outputting the anomaly score and/or the normalized score.

The anomaly enrichment system generates a weighted list of abnormal transaction patterns by compiling a list of the abnormal transaction patterns and including the normalized anomaly score for each abnormal transaction pattern in the list.

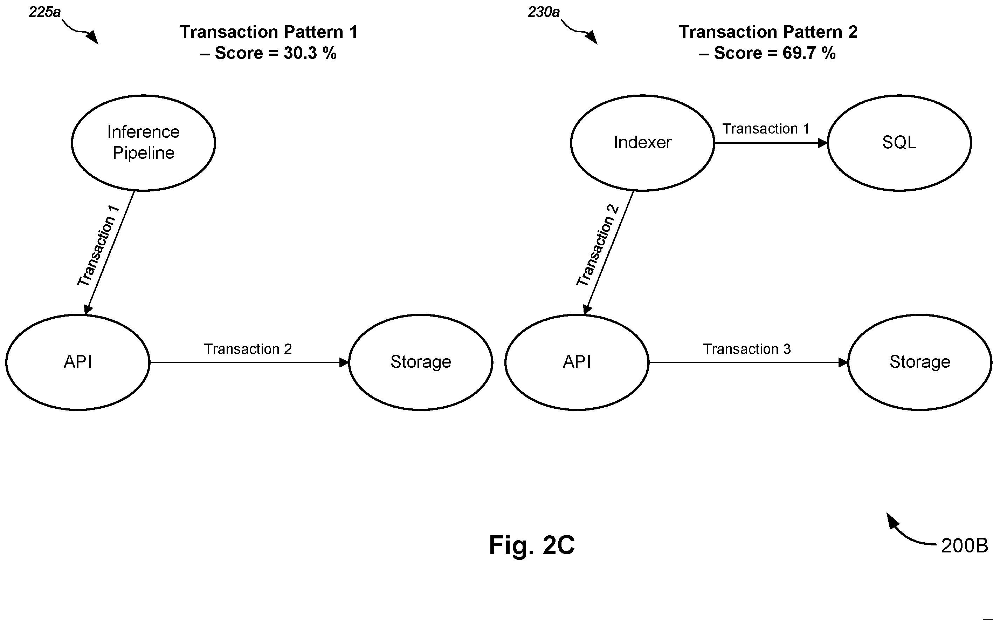

With reference to Fig. 2C, in some examples, the anomaly enrichment system generates a visual representation for the abnormal transaction patterns, where the visual representation for each abnormal transaction pattern including a depiction of an interaction among two or more system components, and the normalized anomaly score for that abnormal transaction pattern. The system components can each include at least one of a compute resource, a memory resource, a storage resource, a network resource, a VM, an orchestrator, a hypervisor, a platform firmware, a device, a software application, a platform, or an infrastructure component. In this case, Transaction Pattern 1 from Fig. 2B is represented in visual form in Fig. 2C by transaction pattern 225a, which includes a first transaction from an inference pipeline to an API, and a second transaction from the API to a storage. One or a combination of transactions 1 and 2 in Transaction Pattern 1 results in about 30 % of abnormal transaction patterns in the incident-relevant time window 240. Similarly, Transaction Pattern 2 from Fig. 2B is represented in visual form in Fig. 2C by transaction pattern 230a, which includes a first transaction from an indexer to a structured query language ("SQL") database, a second transaction from the indexer to an API, and a third transaction from the API to a storage. One or a combination of transactions 1, 2, and 3 in Transaction Pattern 2 results in about 70 % of abnormal transaction patterns in the incident-relevant time window 240. These enrichments can assist in further pinpointing the root cause of the incident. With the root cause determined, appropriate incident resolution can be initiated.

Referring to example implementation 200C of Fig. 2D, interactions include, e.g., interactions between an API and a storage (shown in visual representation 250). As shown in Fig. 2D, log data 255 (depicted as a table of values) includes telemetry data associated with each trace message among a plurality of trace messages between system components. The log data 255 includes trace information such as timestamp data, cloud role name data for originating system components, and messages sent by the originating system components. In some cases, the telemetry data include operation ID, and in some cases, severity as well. In examples, an anomaly enrichment system (e.g., anomaly enrichment system 175 of Fig. 1) identifies message patterns from the plurality of trace messages, and generates trace patterns, by applying log reduction operations on trace message data corresponding to the identified message patterns. With reference to Fig. 2D, the trace patterns generated include "I have inserted **** rows in table ****" (for trace messages at Timestamps 1 and 2) and "Processing message ****** for data ingestion" (for trace messages at Timestamp 3).

Turning to example implementation 200D of Fig. 2E, graph 265 shows percentage of failures at each of four Timestamps for each of three trace patterns (in this case, Pattern 1 with corresponding curve 270, Pattern 2 with corresponding curve 275, and Pattern 3 with corresponding curve 280, depicted in Fig. 2E by a dot-dash line, a dashed line, and a solid line, respectively). Although graph 265 is directed to use of a parameter value corresponding to a percentage of failures, the parameter value can correspond to any one of a number of failures, a percentage of failures, a number of successful operations, or a percentage of successful operations. As shown in graph 265, Pattern 2 has a relatively low percentage of failure at Timestamps 1-3, but spikes in terms of percentage of failure at Timestamp 4. Thus, Timestamp 4 represents an incident-relevant time window 285. In contrast, Pattern 3 has a relatively high percentage of failures, but does not deviate much from its baseline average value. Pattern 1 has a middling percentage of failures, but likewise does not deviate much from its baseline average value. Accordingly, the values for Patterns 1 and 3 are not abnormal while the value for Pattern 2 is abnormal in the incident-relevant time window 285.

In considering normal versus abnormal trace patterns, the anomaly enrichment system or a computing system in communication with the anomaly enrichment system can analyze the values for each trace pattern. For instance, with reference to dataset 290 in Fig. 2E, Pattern 1 is determined to have a baseline average value of 3.17 % Failure, with a standard deviation of 0.35, and an incident value of 3.00 % Failure. Pattern 2 is determined to have a baseline average value of 1.57 % Failure, with a standard deviation of 0.21, and an incident value of 8.0 % Failure. Pattern 3 is determined to have a baseline average value of 6.73 % Failure, with a standard deviation of 0.31, and an incident value of 7.10 % Failure. The anomaly enrichment system or the computing system identifies anomalous or abnormal trace patterns by calculating an anomaly score for each trace pattern. The anomaly score corresponds to a number of standard deviations from the baseline average parameter value to the incident parameter value, and is calculated using Eqn. 1 above. As shown in dataset 290, Patterns 1 through 3 have anomaly scores of -0.49, 30.62, and 1.19, respectively.

In examples, the anomaly enrichment system identifies abnormal transaction patterns based on whether corresponding anomaly scores each exceeds a threshold value (e.g., 2, 3, 4, or 5, or greater). In this example implementation 200D, Pattern 2 has an anomaly score that exceeds the threshold value. For each abnormal transaction pattern, the anomaly enrichment system calculates a normalized anomaly score based on a ratio of the anomaly score for that abnormal transaction pattern and a sum of anomaly scores for all identified abnormal transaction patterns, according to Eqn. 2 above. In this example implementation 200D, Pattern 2 has a normalized score of 100 %. The anomaly enrichment system generates a weighted list of abnormal trace patterns by compiling a list of the abnormal trace patterns and including the normalized anomaly score for each abnormal trace pattern in the list.

Fig. 3 depicts an example UI 300 illustrating an example investigation summary that is output from an LLM when for implementing automated incident investigation functionalities. In example UI 300, the investigation target is listed (in this case, 'Target Component 1'), as well as a determined or estimated impact time and date. A selectable option to run (or re-run) an incident investigation is also provided in this example. The example UI 300 further shows the Investigation Summary, providing details regarding what has been discovered or determined about the incident (e.g., under the section "What we know"), providing possible explanations for the incident (e.g., under the section "Possible explanation"), and providing potential steps that can be taken to resolve the incident (e.g., under the section "What can be done next"). Although a specific example is provided in UI 300, the Investigation Summary can provide detailed information regarding other types of incidents as well as covering or targeting other types of system components (such as those described herein).

Figs. 4A and 4B depict an example method 400 for implementing automated incident investigation. In examples, the operations of example method 400 may be performed by components of an automated incident investigation system (e.g., incident data collection system 120, anomaly detection system 150, correlation system 155, mapping system 160, troubleshooting system 165, anomaly enrichment system 175, group ranking system 185, and/or summary system 190 of automated incident investigation system 105 of Fig. 1). Method 400 of Fig. 4A continues onto Fig. 4B following the circular marker denoted, "A," and returns to Fig. 4A following the circular marker denoted, "B."

In the example method 400 of Fig. 4A, at operation 405, an incident data collection system of an automated incident investigation system receives a plurality of incident data collected from a detection and monitoring platform. In examples, the detection and monitoring platform includes at least one of alert monitoring systems, service level indicator or service level objective monitoring systems, system health monitoring systems, an AI-based interactive assistant system, a resource monitoring system, an applications monitoring system, or an input system for manual triggering of incident investigation. At operation 410, an anomaly detection system of the automated incident investigation system identifies one or more anomalies associated with one or more incident data among the plurality of incident data. In examples, the plurality of incident data includes at least one of alert data, change data, metrics data, log data, or system health data. In some examples, the one or more anomalies identified at operation 410 are associated with the at least one of the alert data, change data, metrics data, log data, or system health data. In some instances, the anomaly detection system includes at least one of an alert anomaly detection subsystem, a change anomaly detection subsystem, a metrics anomaly detection subsystem, a log anomaly detection subsystem, or a system health anomaly detection subsystem that are used for identifying at least one of:

(a) one or more alert anomalies associated with the alert data;
(b) one or more change anomalies associated with the change data;
(c) one or more metrics anomalies associated with the metrics data;
(d) one or more log anomalies associated with the log data; or
(e) one or more system health anomalies associated with the system health data.

At operation 415, a correlation system of the automated incident investigation system identifies which of the one or more anomalies are correlated with respect to a time at which an incident that is flagged for investigation occurred. Method 400 either continues onto the process at operation 420 or continues onto the process at operation 425. At operation 420, a mapping system of the automated incident investigation system maps each of the one or more anomalies that is correlated with respect to the time at which the incident occurred with at least one system component. In some examples, the at least one system component includes at least one of a compute resource, a memory resource, a storage resource, a network resource, a VM, an orchestrator, a hypervisor, a platform firmware, a device, a software application, a platform, or an infrastructure component. Method 400 continues onto the process at operation 425.

At operation 425, a troubleshooting system of the automated incident investigation system causes a plurality of diagnostics systems to identify a potential root cause for the incident, based on the identification of which of the one or more anomalies are correlated with respect to the time at which the incident occurred (from operation 415) and/or based on the mapping of the one or more anomalies (from operation 420). In examples, identification of anomalies (at operation 410), identification of anomalies correlated with respect to the time at which the incident occurred (at operation 415), mapping of correlated anomalies with system components (at operation 420; if mapping was performed in a previous iteration), and causing the plurality of diagnostics systems to identify potential root causes for the incident (425) are repeated for a set number of iterations, based on the potential root causes identified at operation 425 in a preceding iteration, until no additional anomalies are identified as being correlated with respect to the time the incident occurred, or until potential root causes that are identified converge. Method 400 continues onto one of the process at operation 430, the process at operation 435, or the process at operation 440.

At operation 430, an anomaly enrichment system of the automated incident investigation system generates enrichment data. In examples, the anomaly enrichment system compiles enrichment data associated with at least one of a period during which the incident occurred, a transaction pattern that is correlated with the period during which the incident occurred, a trace pattern that is correlated with the period during which the incident occurred, an exception that triggered in the period during which the incident occurred, a geographic region or region covered by a data center from which the incident occurred, or a difference pattern corresponding to a difference between a pattern occurring before the incident occurred and a pattern occurring after the incident occurred. At operation 435, a group ranking system of the automated incident investigation system performs analysis on multiple potential root causes (if more than one is identified at operation 425) and assigns rankings to the multiple potential root causes.

At operation 440, a summary system of the automated incident investigation system generates a first prompt based on the one or more anomalies correlated with the time at which the incident occurred (from operation 415), corresponding incident data among the one or more incident data, and the identified potential root cause for the incident (from operation 425), in some cases, further based on the enrichment data compiled by the anomaly enrichment system (from operation 430) and/or the rankings of the multiple potential root causes (from operation 435).

At operation 445, the summary system of the automated incident investigation system sends the prompt as input into an LLM-based system (e.g., LLM 195 of Fig. 1) to output a summary of results that consolidates information regarding the incident, one or more possible explanations for occurrence of the incident, supporting information for the one or more possible explanations based on the identified potential root cause for the incident, and potential steps to resolve the incident. At operation 450, the automated incident investigation system presents the summary of results (an example of which is shown in Fig. 3). In some examples, method 400 continues onto the process at operation 460 in Fig. 4B following the circular marker denoted, "A," before returning to the process at operation 455 in Fig. 4A, as indicated by the circular marker denoted, "B."

In examples, method 400, at operation 455, further includes the automated incident investigation system initiating incident resolution actions. In an example, the summary system and/or the automated incident investigation system generates a second prompt based on the potential steps to resolve the incident, sends the second prompt as input into the LLM-based system to output first instructions for an automated anomaly resolution system to implement a resolution process, and sends the first instructions to the automated anomaly resolution system. Alternatively, in another example, the summary system and/or the automated incident investigation system generates a third prompt based on the potential steps to resolve the incident, sends the third prompt as input into the LLM-based system to output second instructions for one or more systems affected by the incident to implement a resolution process, and sends the second instructions to the one or more systems. Alternatively, in yet another example, the summary system and/or the automated incident investigation system generates a fourth prompt based on the potential steps to resolve the incident, sends the fourth prompt as input into the LLM-based system to output a service request for a service team to diagnose and resolve the incident, and sends the service request to a service request intake system for the service team.

At operation 460 in Fig. 4B (following the circular marker denoted, "A," in Fig. 4A), method 400 includes the anomaly enrichment system presenting one or more options to modify the summary of results generated and output by the LLM-based system. In examples, the one or more options include at least one of first options to dismiss LLM-generated data, second options to edit the LLM-generated summary of results, or third options to manually add data to the LLM-generated summary of results. At operation 465, the anomaly enrichment system receives user input including one of first instructions to dismiss second data among LLM-generated data in the LLM-generated summary of results, second instructions to edit the LLM-generated summary of results, or third instructions to manually add third data to the LLM-generated summary of results. In some cases, the second data includes at least one of anomalous data or irrelevant data. In some instances, the third data includes at least one of one or more resources, one or more alerts, one or more logs, one or more metrics, one or more diagnostics results, one or more text notes, or one or more images. At operation 470, the anomaly enrichment system generates an updated summary of results based on the user input. At operation 475, the anomaly enrichment system presents the updated summary of results. Method 400 returns to the process at operation 455 in Fig. 4A following the circular marker denoted, "B."

Fig. 5 depicts another example method 500 for implementing automated incident investigation. In examples, the operations of example method 500 may be performed by components of an automated incident investigation system (e.g., results consolidation system 115, anomaly enrichment system 175, and/or a summary system 190 of automated incident investigation system 105 of Fig. 1).

In the example method 500 of Fig. 5, at operation 505, a results consolidation system of an automated incident investigation system receives first data. In some examples, the first data includes one or more anomalies that are correlated with a time at which an incident occurred, incident data corresponding to the one or more anomalies, and a potential root cause that is identified for the incident. At operation 510, an anomaly enrichment system of the results consolidation system compiles or generates enrichment data.

At operation 515, a summary system of the automated incident investigation system generates a first prompt based on the first data (from operation 505) and the enrichment data (from operation 510). At operation 520, the summary system of the automated incident investigation system sends the first prompt as input into an LLM-based system (e.g., LLM 195 of Fig. 1) to output a summary of results that consolidates information regarding the incident, one or more possible explanations for occurrence of the incident, supporting information for the one or more possible explanations based on the identified potential root cause for the incident, and potential steps to resolve the incident. At operation 525, the automated incident investigation system presents the summary of results (an example of which is shown in Fig. 3).

In examples, method 500, at operation 530, further includes the automated incident investigation system initiating incident resolution actions. In an example, the summary system and/or the automated incident investigation system generates a second prompt based on the potential steps to resolve the incident, sends the second prompt as input into the LLM-based system to output first instructions for an automated anomaly resolution system to implement a resolution process, and sends the first instructions to the automated anomaly resolution system. Alternatively, in another example, the summary system and/or the automated incident investigation system generates a third prompt based on the potential steps to resolve the incident, sends the third prompt as input into the LLM-based system to output second instructions for one or more systems affected by the incident to implement a resolution process, and sends the second instructions to the one or more systems. Alternatively, in yet another example, the summary system and/or the automated incident investigation system generates a fourth prompt based on the potential steps to resolve the incident, sends the fourth prompt as input into the LLM-based system to output a service request for a service team to diagnose and resolve the incident, and sends the service request to service request intake system for the service team.

In an example, compiling or generating enrichment data (at operation 510) includes the anomaly enrichment system compiling transaction pattern data based on log data associated with a plurality of transactions between system components (at operation 535), and generating a weighted list of abnormal transaction patterns correlated with the time at which the incident occurred based on the compiled transaction pattern data (at operation 540). In examples, the log data includes telemetry data associated with each transaction among the plurality of transactions between system components. In some cases, the telemetry data includes at least one of operation ID, operation parent ID, or custom dimension data for each transaction. In examples, compiling the transaction pattern data based on the log data and generating the weighted list of abnormal transaction patterns (at operations 535 and 540) include the anomaly enrichment system assigning transaction IDs to the plurality of transactions based on the telemetry data, combining transactions that share transaction IDs, and identifying transaction patterns from combined and uncombined transactions among the plurality of transactions. Compiling the transaction pattern data based on the log data and generating the weighted list of abnormal transaction patterns (at operations 535 and 540) further include, for each transaction pattern, determining a baseline average parameter value over a period before the time at which the incident occurred, a standard deviation for the baseline average parameter value, and an incident parameter value corresponding to a parameter value after the incident occurred, and calculating an anomaly score corresponding to a number of standard deviations from the baseline average parameter value to the incident parameter value.

The anomaly enrichment system identifies abnormal transaction patterns based on whether corresponding anomaly scores each exceeds a threshold value (e.g., 2, 3, 4, or 5, or greater). For each abnormal transaction pattern, the anomaly enrichment system calculates a normalized anomaly score based on a ratio of the anomaly score for that abnormal transaction pattern and a sum of anomaly scores for all identified abnormal transaction patterns. The anomaly enrichment system generates the weighted list of abnormal transaction patterns by compiling a list of the abnormal transaction patterns and including the normalized anomaly score for each abnormal transaction pattern in the list. In examples, the anomaly enrichment system generates a visual representation for the abnormal transaction patterns, the visual representation for each abnormal transaction pattern including a depiction of an interaction among two or more system components, and the normalized anomaly score for that abnormal transaction pattern.

In another example, compiling or generating enrichment data (at operation 510) includes the anomaly enrichment system compiling trace message data based on log data associated with a plurality of trace messages between system components (at operation 545), and generating a list of abnormal trace patterns correlated with the time at which the incident occurred, by applying log reduction operations on the trace message data (at operation 550). In examples, the log data includes telemetry data associated with each trace message among the plurality of trace messages between system components. In some examples, compiling the trace message data based on the log data and generating the list of abnormal trace patterns (at operations 545 and 550) include the anomaly enrichment system identifying message patterns from the plurality of trace messages, and generating trace patterns, by applying log reduction operations on trace message data corresponding to the identified message patterns. Compiling the trace message data based on the log data and generating the list of abnormal trace patterns (at operations 545 and 550) further include, for each trace pattern, determining a baseline average parameter value over a period before the time at which the incident occurred, a standard deviation for the baseline average parameter value, and an incident parameter value corresponding to a parameter value after the incident occurred.

The anomaly enrichment system calculates an anomaly score corresponding to a number of standard deviations from the baseline average parameter value to the incident parameter value, identifies abnormal trace patterns based on whether corresponding anomaly scores each exceeds a threshold value (e.g., 2, 3, 4, or 5, or greater), and generates the list of abnormal trace patterns by compiling the identified abnormal trace patterns. In examples, for each abnormal trace pattern, the anomaly enrichment system calculates a normalized anomaly score based on a ratio of the anomaly score for that abnormal trace pattern and a sum of anomaly scores for all identified abnormal trace patterns, and generates a weighted list of abnormal trace patterns by compiling a list of the abnormal trace patterns and including the normalized anomaly score for each abnormal trace pattern in the list.

In some examples, the parameter value corresponds to one of a number of failures, a percentage of failures, a number of successful operations, or a percentage of successful operations. In some instances, the system components each includes at least one of a compute resource, a memory resource, a storage resource, a network resource, a VM, an orchestrator, a hypervisor, a platform firmware, a device, a software application, a platform, or an infrastructure component.

In some aspects, the enrichment data that is compiled and generated at operation 510 further includes at least one of a time correlation result, a list of exception patterns, a difference pattern, or region data. In some instances, the time correlation result corresponds to enrichment data associated with a period during which the incident occurred, and compiling or generating the enrichment data (at operation 510) includes the anomaly enrichment system compiling time data associated with the period during which the incident occurred, determining whether the potential root cause occurred within the period during which the incident occurred or before the time at which the incident occurred, and generating the time correlation result based on the determination. In some cases, the list of exception patterns corresponds to enrichment data associated with exceptions that triggered in a period during which the incident occurred, and compiling or generating the enrichment data (at operation 510) includes the anomaly enrichment system compiling error message data based on log data extracted from the incident data, and generating the list of exception patterns correlated with the time at which the incident occurred, by applying log reduction operations on the error message data.

In some examples, the difference pattern corresponds to enrichment data associated with a difference pattern corresponding to a difference between a pattern occurring before the incident occurred and a pattern occurring after the incident occurred, and compiling or generating the enrichment data (at operation 510) includes the anomaly enrichment system compiling first pattern data corresponding to a first period before the incident occurred, compiling second pattern data corresponding to a second period after the incident occurred, and computing the difference pattern based on a difference between the first pattern data and the second pattern data. In examples, the region data corresponds to enrichment data associated with a region from which the incident occurred, and compiling or generating the enrichment data (at operation 510) includes the anomaly enrichment system compiling region data associated with the region, the region corresponding to a geographic region or a cloud region covered by a data center in which at least one system component corresponding to the incident is located.

In examples, following the process of presenting the summary of results (at operation 525), the anomaly enrichment system presents one or more options to modify the summary of results generated and output by the LLM-based system (at operation 555). In examples, the one or more options include at least one of first options to dismiss LLM-generated data, second options to edit the LLM-generated summary of results, or third options to manually add data to the LLM-generated summary of results. At operation 560, the anomaly enrichment system receives user input including one of first instructions to dismiss second data among LLM-generated data in the LLM-generated summary of results, second instructions to edit the LLM-generated summary of results, or third instructions to manually add third data to the LLM-generated summary of results. In some cases, the second data includes at least one of anomalous data or irrelevant data. In some instances, the third data includes at least one of one or more resources, one or more alerts, one or more logs, one or more metrics, one or more diagnostics results, one or more text notes, or one or more images. At operation 565, the anomaly enrichment system generates an updated summary of results based on the user input. At operation 570, the anomaly enrichment system presents the updated summary of results. In some examples, method 500 continues onto the process at operation 530.

While the techniques and procedures in methods 400, 500 are depicted and/or described in a certain order for purposes of illustration, it should be appreciated that certain procedures may be reordered and/or omitted within the scope of various embodiments. Moreover, while the methods 400, 500 may be implemented by or with (and, in some cases, are described below with respect to) the systems, examples, or embodiments 100, 200A, 200B, 200C, 200D, and 300 of Figs. 1, 2A, 2B-2C, 2D, 2E, 3A, 3B, 3C, and 3D, respectively (or components thereof), such methods may also be implemented using any suitable hardware (or software) implementation. Similarly, while each of the systems, examples, or embodiments 100, 200A, 200B, 200C, 200D, and 300 of Figs. 1, 2A, 2B-2C, 2D, 2E, 3A, 3B, 3C, and 3D, respectively (or components thereof), can operate according to the methods 400, 500 (e.g., by executing instructions embodied on a computer readable medium), the systems, examples, or embodiments 100, 200A, 200B, 200C, 200D, and 300 of Figs. 1, 2A, 2B-2C, 2D, 2E, 3A, 3B, 3C, and 3D can each also operate according to other modes of operation and/or perform other suitable procedures.

As should be appreciated from the foregoing, the present technology provides multiple technical benefits and solutions to technical problems. For instance, provisioning cloud computing services generally raises multiple technical problems. For example, one technical problem includes occasional unplanned or unforeseen interruptions ("incidents" or "service incidents") occur that impacts systems, services, applications, users, and/or devices. Although some existing solutions cover diagnostics of such incidents, such solutions are domain-based, and as such these solutions are not aware of what is happening under the applications, are not aware of the platform or the VM itself. If the issue is on that level, then such a solution might provide the wrong responses regarding what to do. Also, current incident investigation tools are manually implemented processes that implemented based on dashboards, queries, troubleshooters, and/or other similar tools.

The present technology provides for end-to-end automated incident investigation across multiple layers, including the application layer, the managed infrastructure layer, and the platform layer. By reducing the need for manual triage, the system aims to swiftly navigate users from incident detection to resolution. The present technology also provides enhanced reliability, improved usability, and increased user interaction performance, in terms of providing an end-to-end solution including anomaly detection, troubleshooting, enrichment enhancement, and/or recommendations regarding resolutions for the incident.

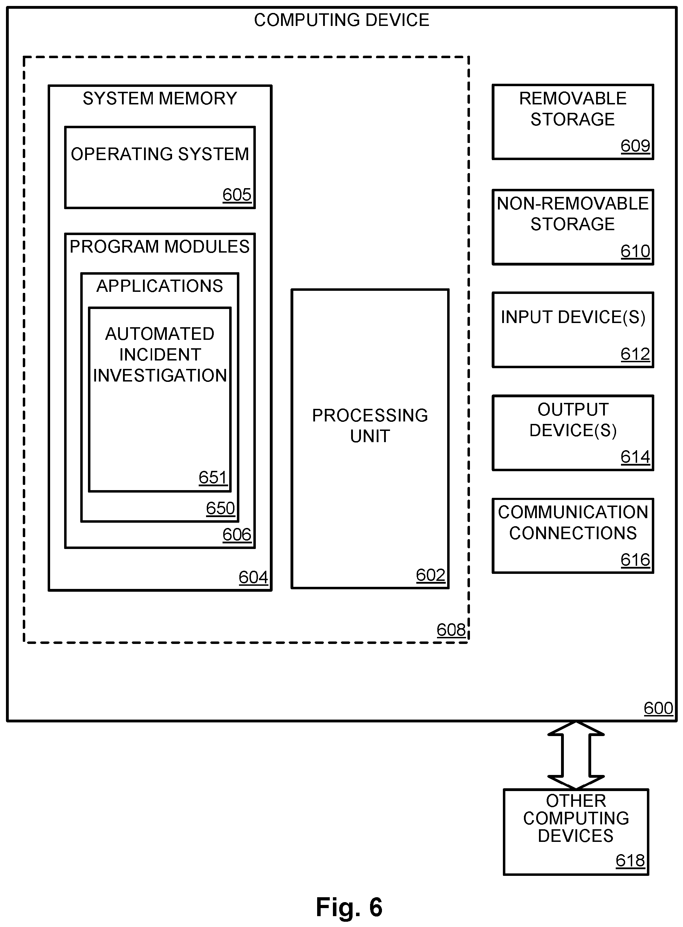

Fig. 6 depicts a block diagram illustrating physical components (i.e., hardware) of a computing device 600 with which examples of the present disclosure may be practiced. The computing device components described below may be suitable for a client device implementing the automated incident investigation, as discussed above. In a basic configuration, the computing device 600 may include at least one processing unit 602 and a system memory 604. The processing unit(s) (e.g., processors) may be referred to as a processing system. Depending on the configuration and type of computing device, the system memory 604 may include volatile storage (e.g., random access memory), non-volatile storage (e.g., read-only memory), flash memory, or any combination of such memories. The system memory 604 may include an operating system 605 and one or more program modules 606 suitable for running software applications 650, such as automated incident investigation functions 651, to implement one or more of the systems or methods described above.

The operating system 605, for example, may be suitable for controlling the operation of the computing device 600. Furthermore, aspects of the invention may be practiced in conjunction with a graphics library, other operating systems, or any other application program and is not limited to any particular application or system. This basic configuration is illustrated in Fig. 6 by those components within a dashed line 608. The computing device 600 may have additional features or functionalities. For example, the computing device 600 may also include additional data storage devices (which may be removable and/or non-removable), such as, for example, magnetic disks, optical disks, or tape. Such additional storage is illustrated in Fig. 6 by a removable storage device(s) 609 and a non-removable storage device(s) 610.

As stated above, a number of program modules and data files may be stored in the system memory 604. While executing on the processing unit 602, the program modules 606 may perform processes including one or more of the operations of the method(s) as illustrated in Figs. 4-5B, or one or more operations of the system(s) and/or apparatus(es) as described with respect to Figs. 1-3, or the like. Other program modules that may be used in accordance with examples of the present disclosure may include applications such as electronic mail and contacts applications, word processing applications, spreadsheet applications, database applications, slide presentation applications, drawing or computer-aided application programs, artificial intelligence ("AI") applications and machine learning ("ML") modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 6 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 600 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 600 may also have one or more input devices 612 such as a keyboard, a mouse, a pen, a sound input device, and/or a touch input device, etc. The output device(s) 614 such as a display, speakers, and/or a printer, etc. may also be included. The aforementioned devices are examples and others may be used. The computing device 600 may include one or more communication connections 616 allowing communications with other computing devices 618. Examples of suitable communication connections 616 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 604, the removable storage device 609, and the non-removable storage device 610 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 600. Any such computer storage media may be part of the computing device 600. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where $n$ denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of $n$ in X05n may be the same or different from the integer value of $n$ in X10n for component #2 X10a-X10n, and so on. In other cases, other suffixes (e.g., $s, t, u, v, w, x, y,$ and/or $z$) may similarly denote non-negative integer numbers that (together with $n$ or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the spirit of the broader aspects of the general inventive concept embodied in this application that do not depart from the broader scope of the claimed invention.

Systems and methods are provided for automated incident investigation. Anomaly detection is used to identify anomalies in incident data (e.g., alerts, changes, metrics, logs, and/or system health), and the identified anomalies are converted into facts (or textual prompt inputs for a large language model ("LLM")). A troubleshooting or diagnostic system is run on the anomalies to provide additional facts to identify a root cause of an incident. The facts from the diagnostics, the facts from the anomaly detections are entered into a consolidated explainer that generates a summary of what happened, what is a likely cause, and what to do next to resolve the issue. In examples, anomaly enrichment data including a time correlation result, a weighted list of abnormal transaction patterns, a list of abnormal trace patterns, a list of exception patterns, a difference pattern, and/or region data are input as further facts to enhance the incident investigation process.

In an example, there is provided an automated incident investigation system, comprising: an investigation orchestration system, comprising: an incident data collection system; a diagnostics triggering system including an anomaly detection system and a correlation system; and a troubleshooting system; and a results consolidation system, comprising: a platform consolidation system including a summary system; wherein the investigation orchestration system executes computer executable instructions that cause the investigation orchestration system to perform first operations comprising: receiving, using the incident data collection system, a plurality of incident data collected from a detection and monitoring platform; identifying, using the anomaly detection system, one or more anomalies associated with one or more incident data among the plurality of incident data; identifying, using the correlation system, which of the one or more anomalies are correlated with respect to a time at which an incident that is flagged for investigation occurred; and causing, using the troubleshooting system, a plurality of diagnostics systems to identify a potential root cause for the incident, based on the identification of which of the one or more anomalies are correlated with respect to the time at which the incident occurred; and wherein the results consolidation system executes computer executable instructions that cause the results consolidation system to perform second operations comprising: generating, using the summary system, a first prompt based on the one or more anomalies correlated with the time at which the incident occurred, corresponding incident data among the one or more incident data, and the identified potential root cause for the incident; sending, using the summary system, the first prompt as input into a large language model ("LLM") -based system to output a summary of results that consolidates information regarding the incident, one or more possible explanations for occurrence of the incident, supporting information for the one or more possible explanations based on the identified potential root cause for the incident, and potential steps to resolve the incident; and presenting the summary of results.

In an example, the plurality of incident data includes at least one of alert data, change data, metrics data, log data, or system health data during execution of a workload, wherein the anomaly detection system includes a corresponding at least one of an alert anomaly detection subsystem, a change anomaly detection subsystem, a metrics anomaly detection subsystem, a log anomaly detection subsystem, or a system health anomaly detection subsystem, wherein identifying the one or more anomalies associated with the one or more incident data comprises identifying at least one of one or more alert anomalies associated with the alert data, one or more change anomalies associated with the change data, one or more metrics anomalies associated with the metrics data, one or more log anomalies associated with the log data, or one or more system health anomalies associated with the system health data, using the corresponding at least one of the alert anomaly detection subsystem, the change anomaly detection subsystem, the metrics anomaly detection subsystem, the log anomaly detection subsystem, or the system health anomaly detection subsystem.

In an example, the workload includes one of a compute workload, a virtual machine ("VM") workload, a container orchestration environment workload, a software application workload, an AI workload, a machine learning ("ML") workload, a system operation workload, a memory access and operation workload, a database access and operation workload, a data transfer workload, or a service bus workload.

In an example, the alert data corresponds to data that is collected by the detection and monitoring platform when a parameter value being monitored exceeds one of a set threshold value, a set threshold percentage, a set multiple of standard deviations for the parameter value, or a deviation from an observed pattern, wherein the parameter value corresponds to one of an amount of compute resources used, a percentage of compute resource used, an amount of memory resources used, a percentage of memory resource used, an amount of storage resources used, a percentage of storage resource used, a number of failures, a percentage of failures, a number of successful operations, or a percentage of successful operations.

In an example, the change data corresponds to data that is collected by the detection and monitoring platform when an incident occurs within a threshold period following one of a configuration change, a certificate change, a permissions change, a pathname change, an identifier ("ID") change, a location change, a patch installation, a hardware update, a firmware update, or a software update for a corresponding one of a compute resource, a memory resource, a storage resource, a network resource, a VM, an orchestrator, a hypervisor, a platform firmware, a device, a software application, a platform, or infrastructure component.

In an example, the metrics data corresponds to data that is collected by the detection and monitoring platform when time-series metrics values being monitored exceed one of a set threshold value, a set threshold percentage, a set multiple of standard deviations for the time-series metrics values, a sudden spike in observed metrics values, a sudden drop in observed metrics values, or a deviation from an observed pattern in the time-series metrics values, wherein the time-series metrics values correspond to metrics related to one of an amount of compute resources used, a percentage of compute resource used, an amount of memory resources used, a percentage of memory resource used, an amount of storage resources used, a percentage of storage resource used, a number of failures, a percentage of failures, a number of successful operations, or a percentage of successful operations.

In an example, the log data corresponds to data that is collected by the detection and monitoring platform when a new pattern in a log for one of a compute resource, a memory resource, a storage resource, a network resource, a VM, an orchestrator, a hypervisor, a platform firmware, a device, a software application, a platform, or infrastructure component is observed, and a sentiment analysis on the new pattern indicates a potential issue with the new pattern.

In an example, the system health data corresponds to data that is collected by the detection and monitoring platform when a health signal value being monitored for one of a compute resource, a memory resource, a storage resource, a network resource, a VM, an orchestrator, a hypervisor, a platform firmware, a device, a software application, a platform, or infrastructure component either falls below a threshold health level or deviates from a determined normal range of operating parameter values.

In an example, the detection and monitoring platform includes at least one of alert monitoring systems, service level indicator or service level objective monitoring systems, system health monitoring systems, an AI-based interactive assistant system, a resource monitoring system, an applications monitoring system, or an input system for manual triggering of incident investigation.

In an example, the diagnostics triggering system further includes a mapping system, wherein the first operations further comprise: mapping, using the mapping system, each of the one or more anomalies that is correlated with respect to the time at which the incident occurred with at least one system component, wherein the at least one system component includes at least one of a compute resource, a memory resource, a storage resource, a network resource, a VM, an orchestrator, a hypervisor, a platform firmware, a device, a software application, a platform, or infrastructure component; wherein causing the plurality of diagnostics systems to identify the potential root cause for the incident is further based on the mapping of the one or more anomalies.

In an example, the first operations further comprise: repeating the following operations for a set number of iterations, until no additional anomalies are identified as being correlated with respect to the time the incident occurred, or until potential root causes that are identified converge: identifying, using the anomaly detection system, one or more additional anomalies based on the potential root causes initially identified by the plurality of diagnostics systems or based on potential root causes identified in a preceding iteration; identifying, using the correlation system, which of the one or more additional anomalies are correlated with respect to the time at which the incident occurred; and causing, using the troubleshooting system, the plurality of diagnostics systems to identify additional potential root causes for the incident, based at least on the one or more additional anomalies that are identified to correlate with the time at which the incident occurred.

In an example, the platform consolidation system further comprises an anomaly enrichment system, wherein the anomaly enrichment system compiles enrichment data associated with at least one of a period during which the incident occurred, a transaction pattern that is correlated with the period during which the incident occurred, a trace pattern that is correlated with the period during which the incident occurred, an exception that triggered in the period during which the incident occurred, a geographic region or region covered by a data center from which incident occurred, or a difference pattern corresponding to a difference between a pattern occurring before the incident occurred and a pattern occurring after the incident occurred, wherein the first prompt is further based on the enrichment data compiled by the anomaly enrichment system.

In an example, the platform consolidation system further comprises a group ranking system, wherein the potential root cause for the incident includes multiple potential root causes, wherein the group ranking system performs analysis on the multiple potential root causes and assigns rankings to the multiple potential root causes, wherein the first prompt is further based on the rankings of the multiple potential root causes.

In an example, the second operations further comprise one of: generating a second prompt based on the potential steps to resolve the incident, sending the second prompt as input into the LLM-based system to output first instructions for an automated anomaly resolution system to implement a resolution process, and sending the first instructions to the automated anomaly resolution system; generating a third prompt based on the potential steps to resolve the incident, sending the third prompt as input into the LLM-based system to output second instructions for one or more systems affected by the incident to implement a resolution process, and sending the second instructions to the one or more systems; or generating a fourth prompt based on the potential steps to resolve the incident, sending the fourth prompt as input into the LLM-based system to output a service request for a service team to diagnose and resolve the incident, and sending the service request to service request intake system for the service team.

In an example, there is provided a computer-implemented method, comprising: receiving, by an incident data collection system of an automated incident investigation system, a plurality of incident data collected from a detection and monitoring platform; identifying, by an anomaly detection system of the automated incident investigation system, one or more anomalies associated with one or more incident data among the plurality of incident data; identifying, by a correlation system of the automated incident investigation system, which of the one or more anomalies are correlated with respect to a time at which an incident that is flagged for investigation occurred; causing, by a troubleshooting system of the automated incident investigation system, a plurality of diagnostics systems to identify a potential root cause for the incident, based on the identification of which of the one or more anomalies are correlated with respect to the time at which the incident occurred; generating, by a summary system of the automated incident investigation system, a prompt based on the one or more anomalies correlated with the time at which the incident occurred, corresponding incident data among the one or more incident data, and the identified potential root cause for the incident; sending, by the summary system of the automated incident investigation system, the prompt as input into a large language model ("LLM") -based system to output a summary of results that consolidates information regarding the incident, one or more possible explanations for occurrence of the incident, supporting information for the one or more possible explanations based on the identified potential root cause for the incident, and potential steps to resolve the incident; and presenting, by the automated incident investigation system, the summary of results.

In an example, there is provided a system, comprising: an investigation orchestration system, comprising: an incident data collection system; a diagnostics triggering system, comprising: an anomaly detection system; a correlation system; and a mapping system; and a troubleshooting system; wherein the investigation orchestration system executes computer executable instructions that cause the investigation orchestration system to perform first operations comprising: receiving, using the incident data collection system, a plurality of incident data including at least one of alert data, change data, metrics data, log data, or system health data collected from a detection and monitoring platform; identifying, using the anomaly detection system, one or more anomalies associated with the at least one of the alert data, change data, metrics data, log data, or system health data; identifying, using the correlation system, which of the one or more anomalies are correlated with respect to a time at which an incident that is flagged for investigation occurred; and mapping, using the mapping system, each of the one or more anomalies that is correlated with respect to the time at which the incident occurred with at least one system component; and causing, using the troubleshooting system, a plurality of diagnostics systems to identify a potential root cause for the incident, based on the identification of which of the one or more anomalies are correlated with respect to the time at which the incident occurred; wherein the one or more anomalies correlated with the time at which the incident occurred, corresponding incident data among the at least one of the alert data, change data, metrics data, log data, or system health data, the at least one system component mapped with the one or more anomalies correlated with the time at which the incident occurred, and the identified potential root cause for the incident are used to generate a prompt for a large language model ("LLM") -based system to output a summary of results that consolidates information regarding the incident, one or more possible explanations for occurrence of the incident, supporting information for the one or more possible explanations based on the identified potential root cause for the incident, and potential steps to resolve the incident.

In an example, the first operations further comprise: iterating identification of anomalies correlated with respect to the time at which the incident occurred, mapping of correlated anomalies with system components, and causing the plurality of diagnostics systems to identify potential root causes for the incident for a set number of iterations, until no additional anomalies are identified as being correlated with respect to the time the incident occurred, or until potential root causes that are identified converge.

In an example, the at least one system component includes at least one of a compute resource, a memory resource, a storage resource, a network resource, a VM, an orchestrator, a hypervisor, a platform firmware, a device, a software application, a platform, or infrastructure component.

In an example, the system further comprises: a results consolidation system, comprising: a platform consolidation system including a summary system; wherein the results consolidation system executes computer executable instructions that cause the results consolidation system to perform second operations comprising: generating, using the summary system, the prompt the prompt for the LLM-based system; and presenting the summary of results.

In an example, the platform consolidation system further comprises an anomaly enrichment system and a group ranking system, wherein the anomaly enrichment system compiles enrichment data associated with at least one of a period during which the incident occurred, a transaction pattern that is correlated with the period during which the incident occurred, a trace pattern that is correlated with the period during which the incident occurred, an exception that triggered in the period during which the incident occurred, a geographic region or region covered by a data center from which incident occurred, or a difference pattern corresponding to a difference between a pattern occurring before the incident occurred and a pattern occurring after the incident occurred; wherein the potential root cause for the incident includes multiple potential root causes, wherein the group ranking system performs analysis on the multiple potential root causes and assigns rankings to the multiple potential root causes; wherein the prompt is further based on the enrichment data compiled by the anomaly enrichment system and based on the rankings of the multiple potential root causes.

**Claims**

1. An automated incident investigation system (105), comprising:

   an investigation orchestration system (110), comprising:

   an incident data collection system (120);
   a diagnostics triggering system (145) including an anomaly detection system (150) and a correlation system (155); and
   a troubleshooting system (165); and

   a results consolidation system (115), comprising:
   a platform consolidation system (170) including a summary system;
   wherein the investigation orchestration system executes computer executable instructions that cause the investigation orchestration system to perform first operations comprising:

   receiving (405), using the incident data collection system, a plurality of incident data collected from a detection and monitoring platform;
   identifying (410), using the anomaly detection system, one or more anomalies associated with one or more incident data among the plurality of incident data;
   identifying (415), using the correlation system, which of the one or more anomalies are correlated with respect to a time at which an incident that is flagged for investigation occurred; and
   causing (425), using the troubleshooting system, a plurality of diagnostics systems to identify a potential root cause for the incident, based on the identification of which of the one or more anomalies are correlated with respect to the time at which the incident occurred; and

   wherein the results consolidation system executes computer executable instructions that cause the results consolidation system to perform second operations comprising:

   generating (440), using the summary system, a first prompt based on the one or more anomalies correlated with the time at which the incident occurred, corresponding incident data among the one or more incident data, and the identified potential root cause for the incident;
   sending (445), using the summary system, the first prompt as input into a large language model ("LLM") -based system to output a summary of results that consolidates information regarding the incident, one or more possible explanations for occurrence of the incident, supporting information for the one or more possible explanations based on the identified potential root cause for the incident, and potential steps to resolve the incident; and
   presenting (450) the summary of results.

2. The automated incident investigation system of claim 1, wherein the plurality of incident data includes at least one of alert data, change data, metrics data, log data, or system health data during execution of a workload, wherein the anomaly detection system includes a corresponding at least one of an alert anomaly detection subsystem, a change anomaly detection subsystem, a metrics anomaly detection subsystem, a log anomaly detection subsystem, or a system health anomaly detection subsystem,
   wherein identifying the one or more anomalies associated with the one or more incident data comprises identifying at least one of one or more alert anomalies associated with the alert data, one or more change anomalies associated with the change data, one or more metrics anomalies associated with the metrics data, one or more log anomalies associated with the log data, or one or more system health anomalies associated with the system health data, using the corresponding at least one of the alert anomaly detection subsystem, the change anomaly detection subsystem, the metrics anomaly detection subsystem, the log anomaly detection subsystem, or the system health anomaly detection subsystem.

3. The automated incident investigation system of claim 2, wherein the workload includes one of a compute workload, a virtual machine ("VM") workload, a container orchestration environment workload, a software application workload, an AI workload, a machine learning ("ML") workload, a system operation workload, a memory access and operation workload, a database access and operation workload, a data transfer workload, or a service bus workload.

4. The automated incident investigation system of claim 2, wherein the alert data corresponds to data that is collected by the detection and monitoring platform when a parameter value being monitored exceeds one of a set threshold value, a set threshold percentage, a set multiple of standard deviations for the parameter value, or a deviation from an observed pattern, wherein the parameter value corresponds to one of an amount of compute resources used, a percentage of compute resource used, an amount of memory resources used, a percentage of memory resource used, an amount of storage resources used, a percentage of storage resource used, a number of failures, a percentage of failures, a number of successful operations, or a percentage of successful operations.

5. The automated incident investigation system of claim 2, wherein the change data corresponds to data that is collected by the detection and monitoring platform when an incident occurs within a threshold period following one of a configuration change, a certificate change, a permissions change, a pathname change, an identifier ("ID") change, a location change, a patch installation, a hardware update, a firmware update, or a software update for a corresponding one of a compute resource, a memory resource, a storage resource, a network resource, a VM, an orchestrator, a hypervisor, a platform firmware, a device, a software application, a platform, or infrastructure component.

6. The automated incident investigation system of claim 2, wherein the metrics data corresponds to data that is collected by the detection and monitoring platform when time-series metrics values being monitored exceed one of a set threshold value, a set threshold percentage, a set multiple of standard deviations for the time-series metrics values, a sudden spike in observed metrics values, a sudden drop in observed metrics values, or a deviation from an observed pattern in the time-series metrics values, wherein the time-series metrics values correspond to metrics related to one of an amount of compute resources used, a percentage of compute resource used, an amount of memory resources used, a percentage of memory resource used, an amount of storage resources used, a percentage of storage resource used, a number of failures, a percentage of failures, a number of successful operations, or a percentage of successful operations.

7. The automated incident investigation system of claim 2, wherein the log data corresponds to data that is collected by the detection and monitoring platform when a new pattern in a log for one of a compute resource, a memory resource, a storage resource, a network resource, a VM, an orchestrator, a hypervisor, a platform firmware, a device, a software application, a platform, or infrastructure component is observed, and a sentiment analysis on the new pattern indicates a potential issue with the new pattern.

8. The automated incident investigation system of claim 2, wherein the system health data corresponds to data that is collected by the detection and monitoring platform when a health signal value being monitored for one of a compute resource, a memory resource, a storage resource, a network resource, a VM, an orchestrator, a hypervisor, a platform firmware, a device, a software application, a platform, or infrastructure component either falls below a threshold health level or deviates from a determined normal range of operating parameter values.

9. The automated incident investigation system of claim 1, wherein the detection and monitoring platform includes at least one of alert monitoring systems, service level indicator or service level objective monitoring systems, system health monitoring systems, an AI-based interactive assistant system, a resource monitoring system, an applications monitoring system, or an input system for manual triggering of incident investigation.

10. The automated incident investigation system of claim 1, wherein the diagnostics triggering system further includes a mapping system, wherein the first operations further comprise:

mapping, using the mapping system, each of the one or more anomalies that is correlated with respect to the time at which the incident occurred with at least one system component, wherein the at least one system component includes at least one of a compute resource, a memory resource, a storage resource, a network resource, a VM, an orchestrator, a hypervisor, a platform firmware, a device, a software application, a platform, or infrastructure component;
wherein causing the plurality of diagnostics systems to identify the potential root cause for the incident is further based on the mapping of the one or more anomalies.

11. The automated incident investigation system of claim 10, wherein the first operations further comprise:

repeating the following operations for a set number of iterations, until no additional anomalies are identified as being correlated with respect to the time the incident occurred, or until potential root causes that are identified converge:

identifying, using the anomaly detection system, one or more additional anomalies based on the potential root causes initially identified by the plurality of diagnostics systems or based on potential root causes identified in a preceding iteration;

identifying, using the correlation system, which of the one or more additional anomalies are correlated with respect to the time at which the incident occurred; and

causing, using the troubleshooting system, the plurality of diagnostics systems to identify additional potential root causes for the incident, based at least on the one or more additional anomalies that are identified to correlate with the time at which the incident occurred.

12. The automated incident investigation system of claim 1, wherein the platform consolidation system further comprises an anomaly enrichment system, wherein the anomaly enrichment system compiles enrichment data associated with at least one of a period during which the incident occurred, a transaction pattern that is correlated with the period during which the incident occurred, a trace pattern that is correlated with the period during which the incident occurred, an exception that triggered in the period during which the incident occurred, a geographic region or region covered by a data center from which incident occurred, or a difference pattern corresponding to a difference between a pattern occurring before the incident occurred and a pattern occurring after the incident occurred, wherein the first prompt is further based on the enrichment data compiled by the anomaly enrichment system.

13. The automated incident investigation system of claim 1, wherein the platform consolidation system further comprises a group ranking system, wherein the potential root cause for the incident includes multiple potential root causes, wherein the group ranking system performs analysis on the multiple potential root causes and assigns rankings to the multiple potential root causes, wherein the first prompt is further based on the rankings of the multiple potential root causes.

14. A computer-implemented method (400), comprising:

receiving (405), by an incident data collection system of an automated incident investigation system, a plurality of incident data collected from a detection and monitoring platform;

identifying (410), by an anomaly detection system of the automated incident investigation system, one or more anomalies associated with one or more incident data among the plurality of incident data;

identifying (415), by a correlation system of the automated incident investigation system, which of the one or more anomalies are correlated with respect to a time at which an incident that is flagged for investigation occurred;

causing (425), by a troubleshooting system of the automated incident investigation system, a plurality of diagnostics systems to identify a potential root cause for the incident, based on the identification of which of the one or more anomalies are correlated with respect to the time at which the incident occurred;

generating (440), by a summary system of the automated incident investigation system, a prompt based on the one or more anomalies correlated with the time at which the incident occurred, corresponding incident data among the one or more incident data, and the identified potential root cause for the incident;

sending (445), by the summary system of the automated incident investigation system, the prompt as input into a large language model ("LLM") -based system to output a summary of results that consolidates information regarding the incident, one or more possible explanations for occurrence of the incident, supporting information for the one or more possible explanations based on the identified potential root cause for the incident, and potential steps to resolve the incident; and

presenting (450), by the automated incident investigation system, the summary of results.

15. A system (100), comprising:

an investigation orchestration system (110), comprising:

an incident data collection system (120);
a diagnostics triggering system (145), comprising:

an anomaly detection system (150);
a correlation system (155); and
a mapping system (160); and

a troubleshooting system (165);

wherein the investigation orchestration system executes computer executable instructions that cause the investigation orchestration system to perform first operations comprising:

receiving (405), using the incident data collection system, a plurality of incident data including at least one of alert data, change data, metrics data, log data, or system health data collected from a detection and monitoring platform;

identifying (410), using the anomaly detection system, one or more anomalies associated with the at least one of the alert data, change data, metrics data, log data, or system health data;

identifying (415), using the correlation system, which of the one or more anomalies are correlated with respect to a time at which an incident that is flagged for investigation occurred; and

mapping (420), using the mapping system, each of the one or more anomalies that is correlated with respect to the time at which the incident occurred with at least one system component; and

causing (425), using the troubleshooting system, a plurality of diagnostics systems to identify a potential root cause for the incident, based on the identification of which of the one or more anomalies are correlated with respect to the time at which the incident occurred;

wherein the one or more anomalies correlated with the time at which the incident occurred, corresponding incident data among the at least one of the alert data, change data, metrics data, log data, or system health data, the at least one system component mapped with the one or more anomalies correlated with the time at which the incident occurred, and the identified potential root cause for the incident are used to generate a prompt for a large language model ("LLM") -based system to output a summary of results that consolidates information regarding the incident, one or more possible explanations for occurrence of the incident, supporting information for the one or more possible explanations based on the identified potential root cause for the incident, and potential steps to resolve the incident.

Fig. 1

| Timestamp | Cloud RoleName | Target | Operation ID | Operation Parent ID | Custom Dimensions | |
|---|---|---|---|---|---|---|
| 1 | c1 | t1 | XXXXXX | XXXXXX | XXXXXX | ... |
| 2 | c2 | t2 | XXXXXX | XXXXXX | XXXXXX | ... |
| 3 | c1 | t2 | XXXXXX | XXXXXX | XXXXXX | ... |

205

| Timestamp | Cloud RoleName | Target | Transaction ID |
|---|---|---|---|
| 1 | c1 | t1 | 1 |
| 2 | c2 | t2 | 1 |
| 3 | c1 | t2 | 2 |

210

| Timestamp | Pattern | Transaction ID |
|---|---|---|
| 1 | [(c1 → t1), (c2 → t2)] | 1 |
| 3 | [(c1 → t2)] | 2 |

215

**Fig. 2A**

200A

EP 4 685 647 A1

**Percentage of Failures per Pattern**

| Pattern | Baseline Average Value | Standard Deviation | Incident Value | Anomaly Score | Normalized Score |
|---|---|---|---|---|---|
| 1 | 0.50 | 0.20 | 4.50 | 20.00 | 30.3 % |
| 2 | 1.50 | 0.12 | 7.00 | 45.80 | 69.7 % |
| 3 | 7.50 | 0.40 | 7.40 | -0.25 | 0 % |

**Fig. 2B**

EP 4 685 647 A1

**Transaction Pattern 1
– Score = 30.3 %**

225a

Inference
Pipeline

*Transaction 1*

API

Transaction 2

Storage

**Transaction Pattern 2
– Score = 69.7 %**

230a

Indexer

Transaction 1

SQL

*Transaction 2*

API

Transaction 3

Storage

**Fig. 2C**

200B

250

| Timestamp | Cloud RoleName | Message | Operation ID | |
|---|---|---|---|---|
| 1 | API | I have inserted 20 rows in table t1 | XXXXXX | ... |
| 2 | API | I have inserted 30 rows in table t2 | XXXXXX | ... |
| 3 | API | Processing message ABCDEF for data ingestion | XXXXXX | ... |

255

| Timestamp | Cloud RoleName | Message | Operation ID | |
|---|---|---|---|---|
| 1 | API | I have inserted **** rows in table **** | XXXXXX | ... |
| 2 | API | I have inserted **** rows in table **** | XXXXXX | ... |
| 3 | API | Processing message ****** for data ingestion | XXXXXX | ... |

260

**Fig. 2D**

200C

EP 4 685 647 A1

**Percentage of Failures per Pattern**

*265*

Abnormal

*280*

*275*

*270*

Not abnormal

- ·— ·— Pattern 1
- — — — Pattern 2
- ——— Pattern 3

Percentage Failures (%)

9
8
7
6
5
4
3
2
1
0

Timestamp 1    Timestamp 2    Timestamp 3    Timestamp 4

Time

*285*

*290*

| Pattern | Baseline Average Value | Standard Deviation | Incident Value | Anomaly Score | Normalized Score |
|---------|------------------------|--------------------|----------------|---------------|------------------|
| 1 | 3.17 | 0.35 | 3.00 | -0.49 | 0 % |
| 2 | 1.57 | 0.21 | 8.00 | 30.62 | 100 % |
| 3 | 6.73 | 0.31 | 7.10 | 1.19 | 0 % |

**Fig. 2E**

200D

EP 4 685 647 A1

## Investigation Summary

### What we know

The 'Target Component 1' Container Orchestration Service is experiencing multiple issues. There are performance concerns indicated by a spike in network traffic and an increase in the number of restarting containers. The 'Target_System' namespace shows an increased pod count suggesting potential scalability or configuration issues. Additionally, there are signs of resource pressure with various node conditions like 'DiskPressure,' 'PIDPressure,' and 'MemoryPressure' being reported as false, while 'Ready' status is true. This is accompanied by a decrease in memory utilization metrics and an increase in available memory, which could indicate inefficient resource allocation or potential memory leaks.

### Possible explanation

1. The unusual spikes in various metrics such as 'Number of pods by phase,' 'Network In Bytes,' and 'restartingContainerCount (preview)' alongside drops in 'Memory Working Set Percentage' and 'memoryRssAllocatablePercentage (preview)' could be indicative of an incident where a node's Primary Agent encountered issues, leading to pod churn and restarts. This is supported by the resource health event that refers to the Primary Agent being restarted for recovery, which could also cause a transient increase in 'Network Out Bytes' from a particular node like 'xxxxxxxxxxxxxxxxxxxxxxxxxxxxxx' as it syncs state or pulls new images.

2. The spikes in 'Statuses for various node conditions' and 'Total amount of available memory in a managed cluster' could imply that nodes are simultaneously experiencing Disk, PID, and Memory pressures, though some are still Ready. These pressures may result in the Container Orchestration Service evicting or not scheduling new pods, which is consistent with the observed unneeded Nodes' metric rise. Such node conditions could also force 'Target_System' pods into pending phase, accounting for the increase in 'Number of pods in Ready state.' The observed issues may not be limited to a single root cause but could indicate a complex interaction of system self-recovery mechanisms and resource constraints within the cluster.

### What can be done next

- Review the events for the affected cluster to identify any recent issues with pods nodes, or other resources that could provide additional context to the observed metric abnormalities.
- Investigate the 'Target_System' namespace events and pod statuses, especially for critical components such as Primary Agent to determine if there are recurring issues that could be causing pods to enter pending state or be evicted.
- Examine the specific node 'xxxxxxxxxxxxxxxxxxxxxxxxxxxxxx' for any recurring health issues or resource pressure conditions that could explain the increased network traffic and pod restarts.
- Check the Resource Health for the managed cluster to confirm if there were any recent health advisories or incidents that could have impacted the node's Primary Agent or overall cluster health.
- If the cluster is experiencing resource constraints, consider reviewing and adjusting resource quotas and limits for workloads, or scaling the cluster to ensure sufficient resources are available for stable operation.

**Fig. 3**

300

EP 4 685 647 A1

Receive, by an incident data collection system of an automated incident investigation system, a plurality of incident data collected from a detection and monitoring platform
*405*

Identify, by an anomaly detection system of the automated incident investigation system, one or more anomalies associated with one or more incident data among the plurality of incident data
*410*

Identify, by a correlation system of the automated incident investigation system, which of the one or more anomalies are correlated with respect to a time at which an incident that is flagged for investigation occurred
*415*

Map, using a mapping system of the automated incident investigation system, each of the one or more anomalies that is correlated with respect to the time at which the incident occurred with at least one system component
*420*

Cause, by a troubleshooting system of the automated incident investigation system, a plurality of diagnostics systems to identify a potential root cause for the incident
*425*

Generate, by an anomaly enrichment system of the automated incident investigation system, enrichment data
*430*

Assign, by a group ranking system of the automated incident investigation system, rankings to multiple potential root causes (if more than one)
*435*

Generate, by a summary system of the automated incident investigation system, a prompt
*440*

Send, by the summary system, the prompt as input into an LLM-based system to output a summary of results
*445*

Present, by the automated incident investigation system, the summary of results
*450*

A          B

Initiate, by the automated incident investigation system, incident resolution actions
*455*

Fig. 4A

400

A

Present, by the anomaly
enrichment system, one or more
options to modify the summary
of results generated and output
by the LLM-based system

460

Receive, by the anomaly
enrichment system, user input

465

Generate, by the anomaly
enrichment system, an updated
summary of results based on the
user input

470

Present, by the automated
incident investigation system,
the updated summary of results

475

B

# Fig. 4B

400

**Fig. 5**

500

COMPUTING DEVICE

SYSTEM MEMORY

OPERATING SYSTEM

605

PROGRAM MODULES

APPLICATIONS

AUTOMATED
INCIDENT
INVESTIGATION

651

650

606

604

PROCESSING
UNIT

602

608

REMOVABLE
STORAGE

609

NON-REMOVABLE
STORAGE

610

INPUT DEVICE(S)

612

OUTPUT
DEVICE(S)

614

COMMUNICATION
CONNECTIONS

616

600

OTHER
COMPUTING
DEVICES

618

Fig. 6

EP 4 685 647 A1

## EUROPEAN SEARCH REPORT

**Application Number**

EP 25 18 1611

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SARDA KOMAL ET AL: "Leveraging Large Language Models for the Auto-remediation of Microservice Applications: An Experimental Study", PROCEEDINGS OF THE 3RD WORKSHOP ON SERVERLESS SYSTEMS, APPLICATIONS AND METHODOLOGIES, ACMPUB27, NEW YORK, NY, USA, 10 July 2024 (2024-07-10), pages 358-369, XP059895553, DOI: 10.1145/3663529.3663855 ISBN: 979-8-4007-1559-4 * page 358 - page 362 * ----- | 1-15 | INV. G06F11/07 G06F11/30 G06F11/34 |
| A | US 2023/401122 A1 (CIABARRA JR MARIO LUCIANO [US] ET AL) 14 December 2023 (2023-12-14) * paragraph [0048] - paragraph [0058] * * paragraph [0173] - paragraph [0185] * * paragraph [0269] - paragraph [0317] * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 25 November 2025 | Alonso Nogueiro, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

33

## ANNEX TO THE EUROPEAN SEARCH REPORT
## ON EUROPEAN PATENT APPLICATION NO.

EP 25 18 1611

25-11-2025

| Patent document cited in search report | Publication date | Patent family member(s) | | Publication date |
|---|---|---|---|---|
| US 2023401122 A1 | 14-12-2023 | EP | 4288865 A1 | 13-12-2023 |
| | | US | 2022245013 A1 | 04-08-2022 |
| | | US | 2023401122 A1 | 14-12-2023 |
| | | WO | 2022169892 A1 | 11-08-2022 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63673917, Jeremy Samama
- US 63673934, Yaniv Lavi
- US 98288224